(19) Europäisches Patentamt
European Patent Office
Office européen des brevets

(11) **EP 4 651 504 A1**

(12) **EUROPEAN PATENT APPLICATION**
published in accordance with Art. 153(4) EPC

(43) Date of publication:
19.11.2025 Bulletin 2025/47

(51) International Patent Classification (IPC):
H04N 23/60 (2023.01)        H04N 5/00 (2011.01)
H04M 1/725 (2021.01)

(21) Application number: 24867166.1

(22) Date of filing: 13.08.2024

(52) Cooperative Patent Classification (CPC):
H04M 1/72439; H04M 1/72448; H04M 1/72454;
H04M 1/725; H04N 5/00; H04N 23/60;
H04N 23/611; H04N 23/63; H04N 23/667

(86) International application number:
PCT/CN2024/111615

(87) International publication number:
WO 2025/060749 (27.03.2025 Gazette 2025/13)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 19.09.2023 CN 202311215558

(71) Applicant: Honor Device Co., Ltd.
Shenzhen, Guangdong 518040 (CN)

(72) Inventors:
• CHEN, Zheng
  Shenzhen, Guangdong 518040 (CN)
• DI, Haoxuan
  Shenzhen, Guangdong 518040 (CN)
• GUO, Junlong
  Shenzhen, Guangdong 518040 (CN)

(74) Representative: Epping - Hermann - Fischer
Patentanwaltsgesellschaft mbH
Schloßschmidstraße 5
80639 München (DE)

(54) **PHOTOGRAPHING METHOD, AND ELECTRONIC DEVICE AND STORAGE MEDIUM**

(57) This application provides a shooting method, an electronic device, and a storage medium, which are applied to an electronic device including a flexible display. An electronic device receives a first user operation, and displays a first selfie image on a first display, where the first selfie image includes a human face image, and the first selfie image is an image frame captured by a front-facing camera; the electronic device receives a second user operation; the electronic device obtains first motion data collected by a first motion sensor; the electronic device determines, based on the first motion data, that the second user operation is a flipping selfie action; and the electronic device activates a rear-facing camera, and displays a second selfie image on a second display, where the second selfie image is an image frame captured by the rear-facing camera. In the method, the electronic device can recognize an intention of a user to take a selfie using the rear-facing camera, and automatically switch to the rear-facing camera for a selfie operation. This saves user operations.

First motion data collected by a first motion sensor on a screen A | Second motion data collected by a second motion sensor on a screen B

S801: An action detection module performs preprocessing on the first motion data and the second motion data, to obtain first processed motion data and second processed motion data

S802: The action detection module needs to determine whether the first processed motion data and the second processed motion data satisfy a preset condition — No → S803: End

Yes

S804: The action detection module obtains first feature data based on the first motion data, and obtains second feature data based on the second motion data

S805: The action detection module inputs the first feature data and the second feature data into an intention recognition model, and the intention recognition model outputs a first intention recognition result and a second intention recognition result

S806: Determine whether both the first intention recognition result and the second intention recognition result are a flipping action — No → S807: End

S808: Determine, based on the first processed motion data and the second processed motion data, whether the flipping action is a flipping selfie action — No → S809: End

Yes

S810: The action detection module outputs a flipping selfie action result

FIG. 8

**Description**

This application claims priority to Chinese Patent Application No. 202311215558.7, filed with the China National Intellectual Property Administration on September 19, 2023 and entitled "SHOOTING METHOD, ELECTRONIC DEVICE, AND STORAGE MEDIUM", which is incorporated herein by reference in its entirety.

**TECHNICAL FIELD**

This application relates to the field of terminal technologies, and in particular, to a shooting method, an electronic device, and a storage medium.

**BACKGROUND**

With the rapid development of digital technologies, smart terminal devices have become indispensable tools in people's lives.

At present, a flexible screen has attracted much attention due to its unique characteristics and great potential. Compared with a conventional screen, the flexible screen features strong flexibility and bendability, and can provide users with new bendability characteristic-based interaction manners, so as to meet more needs of the users for the electronic device. For an electronic device equipped with a foldable screen, a foldable display on the electronic device can be switched between a small screen in a folded state and a large screen in an unfolded state at any time.

The foldable screen may include a flip-style foldable screen and an outward-foldable screen. The flip-style foldable screen and the outward-foldable screen may include a front-facing camera and a rear-facing camera. The foldable screen may be switched between the folded state and the unfolded state. When the foldable screen is in the folded state, the user can manually switch to the front-facing camera for taking a selfie, or manually switch to the rear-facing camera for taking a selfie. Therefore, user operations are complex.

**SUMMARY**

This application provides a shooting method, an electronic device, and a storage medium, to enable an electronic device to recognize an intention of a user to take a selfie using a rear-facing camera, and automatically switch to the rear-facing camera for a selfie operation. This saves user operations.

According to a first aspect, this application provides a shooting method. The shooting method is applied to an electronic device including a flexible display, where the flexible display includes a first display and a second display, the first display includes a front-facing camera and a first motion sensor, a back surface of the first display includes a rear-facing camera, the first display and the second display are disposed back-to-back when the flexible display is in a folded state, and the method includes: The electronic device receives a first user operation; in response to the first user operation, the electronic device displays a first selfie image on the first display, where the first selfie image includes a human face image, and the first selfie image is an image frame captured by the front-facing camera; the electronic device receives a second user operation; the electronic device obtains first motion data collected by the first motion sensor; the electronic device determines, based on the first motion data, that the second user operation is a flipping selfie action; and in response to the second user operation being the flipping selfie action, the electronic device activates the rear-facing camera, and displays a second selfie image on the second display, where the second selfie image is an image frame captured by the rear-facing camera.

In the method, the electronic device can recognize an intention of a user to take a selfie using a rear-facing camera, and automatically switch to the rear-facing camera for a selfie operation. This saves user operations.

With reference to the first aspect, in a possible implementation, that the electronic device determines, based on the first motion data, that the second user operation is a flipping selfie action specifically includes: The electronic device inputs the first motion data into an intention recognition model, and determines, by using the intention recognition model, that the second user operation is a flipping action; and in response to the second user operation being the flipping action, when the first motion data satisfies a first condition, the electronic device determines, that the first user operation is the flipping selfie action, where the first condition includes any one or more of the following: a linear acceleration of the electronic device being less than a third value, a length of a motion trajectory of the electronic device being less than the third value, and a rotation radius of the electronic device being less than a fifth value.

With reference to the first aspect, in a possible implementation, a direction that is perpendicular to a left-side edge and a right-side edge of the electronic device and that points to the right-side edge of the electronic device from the left-side edge of the electronic device is taken as a positive direction of an X-axis; a direction that is perpendicular to an upper-side edge and a lower-side edge of the electronic device and that points to the upper-side edge of the electronic device from a lower left-side edge of the electronic device is taken as a positive direction of a Y-axis; and a direction that is perpendicular to the X-axis and the Y-axis and that is away from the rear-facing camera is taken as a positive direction of a Z-axis. Before that the electronic device inputs the first motion data into an intention recognition model, the method further includes: When the first motion data satisfies a second condition, the electronic device inputs the first motion data into the intention recognition model, where the second condition includes any one or more of the following: magnitudes of angular velocities around the X-axis, the Y-axis, and the Z-axis being greater than a first value; and an integral of an angular velocity around the Y-axis in first duration being greater than a second value.

With reference to the first aspect, in a possible implementation, that the electronic device obtains first motion data collected by the first motion sensor specifically includes: After it is detected that the human face image in the image frame captured by the front-facing camera disappears, the electronic device obtains the first motion data collected by the first motion sensor.

With reference to the first aspect, in a possible implementation, the method further includes: In response to displaying a second selfie image on the second display, the electronic device deactivates the front-facing camera, and turns off the first display.

With reference to the first aspect, in a possible implementation, after the electronic device activates the rear-facing camera, the method further includes: The electronic device deactivates the front-facing camera, and turns off the first display.

With reference to the first aspect, in a possible implementation, that the electronic device displays a second selfie image on the second display specifically includes: When it is detected that the image frame captured by the rear-facing camera includes the human face image, the electronic device displays the second selfie image on the second display.

With reference to the first aspect, in a possible implementation, that the electronic device displays a second selfie image on the second display specifically includes: When it is detected that the image frame captured by the rear-facing camera does not include the human face image and no operation performed on the first display by a user is received in second duration, the electronic device displays the second selfie image on the second display.

With reference to the first aspect, in a possible implementation, the method further includes: When it is detected that the image frame captured by the rear-facing camera does not include the human face image and an operation performed on the first display by the user is received in the second duration, the electronic device deactivates the rear-facing camera.

With reference to the first aspect, in a possible implementation, the method further includes: The electronic device activates the front-facing camera, and continuously displays, on the first display, the image frame captured by the front-facing camera.

With reference to the first aspect, in a possible implementation, the second display further includes a second motion sensor. Before the electronic device determines, based on the first motion data, that the second user operation is a flipping selfie action, the method further includes: The electronic device obtains second motion data collected by the second motion sensor; and that the electronic device determines, based on the first motion data, that the second user operation is a flipping selfie action specifically includes: The electronic device determines, based on the first motion data and the second motion data, that the second user operation is the flipping selfie action.

With reference to the first aspect, in a possible implementation, the first motion sensor includes an acceleration sensor and/or an angular velocity sensor, and the first motion data includes acceleration data or angular velocity data.

With reference to the first aspect, in a possible implementation, the second motion sensor includes an acceleration sensor and/or an angular velocity sensor, and the second motion data includes acceleration data or angular velocity data.

According to a second aspect, this application provides an electronic device. The electronic device includes one or more processors and one or more memories, where the one or more memories are coupled to the one or more processors, the one or more memories are configured to store computer program code, the computer program code includes a computer instruction, and when the one or more processors execute the computer instruction, the method according to any one of the possible implementations of the foregoing aspects is performed.

According to a third aspect, an embodiment of this application provides a computer storage medium, including computer instructions. When the computer instructions are run on an electronic device, the communication apparatus is enabled to perform the shooting method in any one of the possible implementations of the foregoing aspects.

According to a fourth aspect, an embodiment of this application provides a computer program product. When the computer program product is run on a computer, the computer is enabled to perform the shooting method in any one of the possible implementations of the foregoing aspects.

For descriptions of beneficial effects in the second aspect to the fourth aspect, refer to the descriptions of the beneficial effects in the first aspect. Details are not described herein again in this application.

## BRIEF DESCRIPTION OF DRAWINGS

FIG. 1 is a schematic diagram of a structure of an electronic device according to an embodiment of this application;
FIG. 2 is a block diagram of a software structure of an electronic device 100 according to an embodiment of this application;
FIG. 3A is a schematic diagram of a display mode of an outward-foldable screen in an unfolded state according to an embodiment of this application;
FIG. 3B is a schematic diagram of a display mode of an outward-foldable screen in a folded state according to an embodiment of this application;

FIG. 3C is a schematic diagram of a display mode of an outward-foldable screen in an intermediate state according to an embodiment of this application;

FIG. 4A is a schematic diagram of a composition structure of a server 200 at an electronic device 100 in an unfolded state shown in FIG. 7;

FIG. 4B is a schematic diagram of an electronic device 100 in a folded state;

FIG. 5A to FIG. 5C are a schematic diagram of a user switching between a front-facing camera and a rear-facing camera for a selfie operation;

FIG. 6A to FIG. 6E are a schematic diagram of an electronic device 100 automatically activating a rear-facing camera and displaying, on a screen B, a human face image captured by the rear-facing camera;

FIG. 7 is a schematic diagram of a functional module according to this application;

FIG. 8 is a schematic diagram of a working principle of an action detection module;

FIG. 9A is a schematic diagram of directions of an X-axis, a Y-axis, and a Z-axis;

FIG. 9B is a schematic diagram of magnitudes of triaxial angular velocities that are obtained by an action detection module and that are in window data;

FIG. 9C and FIG. 9D are a schematic diagram of a flip motion trajectory of an electronic device 100; and

FIG. 10 is a schematic diagram of a working principle of an intention correction module.

## DESCRIPTION OF EMBODIMENTS

The following clearly and completely describes the technical solutions in embodiments of this application with reference to the accompanying drawings. In the descriptions of this embodiment of this application, "/" indicates "or" unless otherwise specified. For example, A/B may represent A or B. In the specification, "and/or" describes only an association relationship between associated objects, and represents that three relationships may exist. For example, A and/or B may represent the following three cases: Only A exists, both A and B exist, and only B exists. In addition, in the descriptions of this embodiment of this application, "plurality" indicates two or more.

The following terms "first" and "second" are only intended for a purpose of description, and should not be understood as an indication or implication of relative importance or implicit indication of a quantity of indicated technical features. Thus, a feature defined by the term "first" or "second" may explicitly or implicitly include one or more features. In the descriptions of embodiments of this application, the term "plurality of" refers to two or more unless otherwise stated.

The term "user interface (user interface, UI)" in the following embodiments of this application is a medium interface for interaction and information exchange between an application or an operating system and a user, and implements conversion between an internal form of information and a form that can be accepted by the user. The user interface is usually represented in a form of a graphical user interface (graphic user interface, GUI), and is a user interface that is related to a computer operation and that is displayed in a graphic manner. The user interface may be a visual interface element such as a text, an icon, a button, a menu, a tab, a text box, a dialog box, a status bar, a navigation bar, or a Widget displayed on a display of the electronic device.

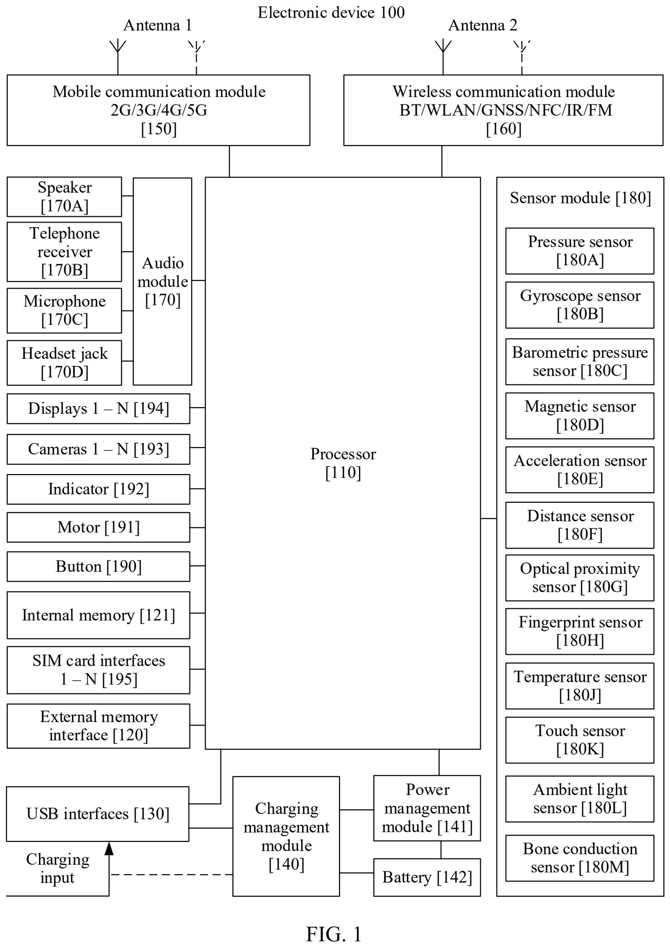

Refer to FIG. 1. FIG. 1 is a schematic diagram of a structure of an electronic device.

The electronic device 100 may be a mobile phone, a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR) device, a virtual reality (virtual reality, VR) device, an artificial intelligence (artificial intelligence, AI) device, a wearable device, a vehicle-mounted device, a smart home device, and/or a smart city device. A specific type of the electronic device is not specifically limited in this embodiment of this application.

The electronic device 100 may include a processor 110, an external memory interface 120, an internal memory 121, a universal serial bus (universal serial bus, USB) interface 130, a charge management module 140, a power management module 141, a battery 142, an antenna 1, an antenna 2, a mobile communication module 150, a wireless communication module 160, an audio module 170, a speaker 170A, a telephone receiver 170B, a microphone 170C, a headset jack 170D, a sensor module 180, a button 190, a motor 191, an indicator 192, a camera 193, a display 194, a subscriber identity module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It can be understood that the structure illustrated in an embodiment of the present invention does not constitute a specific limitation on the electronic device 100. In some other embodiments of this application, the electronic device 100 may include more or fewer components than those shown in the figure, some components may be combined, or some components may be divided, or different component arrangements may be used. The components in the figure may be implemented by hardware, software, or a combination of software and hardware.

The processor 110 may include one or more processing units. For example, the processor 110 may include an application processor (Application Processor, AP), a modem processor, a graphics processing unit (Graphics Processing Unit, GPU), an image signal processor (Image Signal Processor, ISP), a controller, a video codec, a digital signal processor (Digital Signal Processor, DSP), a baseband processor, and/or a neural-network processing unit (Neural-network Processing Unit, NPU). Different processing units may be independent devices, or may be integrated into one or more processors.

The controller may generate an operation control signal according to instruction operation code and a timing signal, and control obtaining and executing of instructions.

A storage may be further disposed in the processor 110 to store instructions and data. In some embodiments, the memory in processor 110 is a cache. The storage may store instructions or data recently used or cyclically used by the processor 110. If the processor 110 needs to use the instructions or the data again, the processor 110 may directly invoke the instructions or the data from the memory. Repeated access is avoided, and waiting time of the processor 110 is reduced, thereby improving the system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) port, and/or the like.

The I2C interface is a bidirectional synchronization serial bus, and includes a serial data line (serial data line, SDA) and a serial clock line (derail clock line, SCL). In some embodiments, the processor 110 may include multiple groups of I2C buses. The processor 110 may be respectively coupled to a touch sensor 180K, a charger, a flash, a camera 193, and the like through different I2C bus interfaces. For example, the processor 110 may be coupled to the touch sensor 180K through the I2C interface, so that the processor 110 communicates with the touch sensor 180K through the I2C bus interface, thereby implementing a touch function of the electronic device 100.

The I2S interface may be configured to perform audio communication. In some embodiments, the processor 110 may include multiple groups of I2S buses. The processor 110 may be coupled to the audio module 170 by using the I2S bus, to implement communication between the processor 110 and the audio module 170. In some embodiments, the audio module 170 may transmit an audio signal to the wireless communication module 160 by using the I2S interface, to implement a function of answering a call by using a Bluetooth headset.

A PCM interface may also be used for audio communication, and samples, quantizes, and encodes an analog signal. In some embodiments, the audio module 170 and the wireless communication module 160 may be coupled by using a PCM bus interface. In some embodiments, the audio module 170 may also transmit an audio signal to the wireless communication module 160 by using the PCM interface, to implement the function of answering a call through the Bluetooth headset. Both the I2S interface and the PCM interface may be used for audio communication.

An UART interface is a universal serial data bus used for asynchronous communication. The bus may be a bidirectional communication bus, and converts to-be-transmitted data between serial communication and parallel communication. In some embodiments, the UART interface is usually configured to connect the processor 110 and the wireless communication module 160. For example, the processor 110 communicates with a Bluetooth module in the wireless communication module 160 through the UART interface, to implement a Bluetooth function. In some embodiments, the audio module 170 may transfer an audio signal to the wireless communication module 160 through the UART interface, to implement a function of playing music through a Bluetooth headset.

An MIPI interface may be configured to connect the processor 110 to a peripheral device such as a display 194 and a camera 193. The MIPI interface includes a camera serial interface (camera serial interface, CSI), a display serial interface (display serial interface, DSI), and the like. In some embodiments, the processor 110 communicates with the camera 193 through the CSI interface, to implement a shooting function of the electronic device 100. The processor 110 communicates with the display 194 through the DSI interface, to implement a display function of the electronic device 100.

A GPIO interface may be configured through software. The GPIO interface may be configured as a control signal or as a data signal. In some embodiments, the GPIO interface may be configured to connect the processor 110 to the camera 193, the display 194, the wireless communication module 160, the audio module 170, the sensor module 180, or the like. The GPIO interface may also be configured as an I2C interface, an I2S interface, an UART interface, an MIPI interface, or the like.

The USB interface 130 is an interface compliant with a USB standard specification, and may be specifically a Mini USB interface, a Micro USB interface, a USB Type C interface, or the like. The USB interface 130 may be configured to connect to the charger to charge the electronic device 100, or may be configured to transmit data between the electronic device 100 and a peripheral device, or may be configured to connect to a headset to play audio by using the headset. The interface may alternatively be configured to connect to another electronic device, for example, an AR device.

It may be understood that an interface connection relationship between modules illustrated in this embodiment of the present invention is merely an example for description, and does not constitute a limitation on the structure of the electronic device 100. In some other embodiments of this application, the electronic device 100 may use an interface connection manner different from that in the above embodiments, or use combinations of a plurality of interface connection manners.

The charge management module 140 is configured to receive charging input from a charger. The charger may be a wireless charger or a wired charger. In some embodiments of wired charging, the charge management module 140 may receive charging input from a wired charger through the USB interface 130. In some embodiments of wireless charging, the charge management module 140 may receive wireless charging inputted through a wireless charging coil of the electronic device 100. When charging the battery 142, the charge management module 140 may further supply power to the electronic device through the power management module 141.

The power management module 141 is configured to connect the battery 142 and the charge management module 140 to the processor 110. The power management module 141 receives an input from the battery 142 and/or an input from the charge management module 140, and supplies power to the processor 110, the internal memory 121, the display 194, the camera 193, the wireless communication module 160, and the like. The power management module 141 may further be configured to monitor parameters such as a battery capacity, a quantity of battery cycles, and a battery health state (power leakage and impedance). In some other embodiments, the power management module 141 may be arranged in the processor 110. In some other embodiments, the power management module 141 and the charge management module 140 may also be arranged in the same device.

A wireless communication function of the electronic device 100 may be implemented by the antenna 1, the antenna 2, the mobile communication module 150, the wireless communication module 160, the modem, the baseband processor, and the like.

The antenna 1 and the antenna 2 are configured to transmit and receive electromagnetic wave signals. Each antenna in the electronic device 100 may be configured to cover one or more communication frequency bands. Different antennas may be further multiplexed to improve antenna utilization. For example, the antenna 1 may be multiplexed into a diversity antenna of a wireless local area network. In some other embodiments, the antenna may be used together with a tuning switch.

The mobile communication module 150 may provide a solution for wireless communication that is applied to the electronic device 100 and that includes 2G/3G/4G/5G and the like. The mobile communication module 150 may include at least one filter, switch, power amplifier, low noise amplifier (LNA), and the like. The mobile communication module 150 may receive an electromagnetic wave by using the antenna 1, perform processing such as filtering or amplification on the received electromagnetic wave, and transmit a processed electromagnetic wave to the modem processor for demodulation. The mobile communication module 150 may further amplify a signal obtained after modulation by the modem processor, and convert an amplified signal into an electromagnetic wave for radiation through the antenna 1. In some embodiments, at least some function modules of the mobile communication module 150 may be arranged in the processor 110. In some embodiments, at least some of the functional modules of the mobile communication module 150 may be disposed in a same device as at least some of the modules of the processor 110.

The modem processor may include a modulator and a demodulator. The modulator is configured to modulate a to-be-sent low frequency baseband signal into a medium or high frequency signal. The demodulator is configured to demodulate a received electromagnetic wave signal into a low frequency baseband signal. Then, the demodulator transfers, to the baseband processor for processing, the low frequency baseband signal obtained through demodulation. The low frequency baseband signal is processed by the baseband processor and then transferred to the application processor. The application processor outputs a sound signal by using an audio device (not limited to the speaker 170A, the telephone receiver 170B, and the like), or displays an image or a video by using the display 194. In some embodiments, the modem processor may be a separate device. In some other embodiments, the modem processor may be independent of the processor 110 and may be disposed in a same device as the mobile communication module 150 or another functional module.

The wireless communication module 160 may provide a solution to wireless communication applied to the electronic device 100 and including wireless local area networks (WLAN) (such as wireless fidelity (Wi-Fi)), Bluetooth (BT), a global navigation satellite system (GNSS), frequency modulation (FM), near field communication (NFC), and an infrared (IR) technology. The wireless communication module 160 may be one or more devices that integrate at least one communication processing module. The wireless communication module 160 receives an electromagnetic wave through the antenna 2, conducts frequency modulation and filtering on an electromagnetic wave signal, and transmits the processed signal to the processor 110. The wireless communication module 160 may further receive a to-be-transmitted signal from the processor 110, conduct frequency modulation and amplification on the to-be-transmitted signal, and convert an amplified signal into an electromagnetic wave for radiation through the antenna 2.

In some embodiments, in the electronic device 100, the antenna 1 is coupled to the mobile communication module 150, and the antenna 2 is coupled to the wireless communication module 160, so that the electronic device 100 can communicate with a network and another device through a wireless communication technology. The wireless communication technology may include a global system for mobile communications (global system for mobile communications, GSM) technology, a general packet radio service (general packet radio service, GPRS) technology, a code division multiple access (code division multiple access, CDMA) technology, a wideband code division multiple access (wideband code division multiple access, WCDMA) technology, a time-division code division multiple access (time-division code division multiple access, TD-SCDMA) technology, a long term evolution (long term evolution, LTE) technology, a BT technology, a GNSS technology, a WLAN technology, an NFC technology, an FM technology, an IR technology, and/or the like. The GNSS may include a global positioning system (global positioning system, GPS), a global navigation satellite system (global navigation satellite system, GLONASS), a Beidou navigation satellite system (beidou navigation satellite system, BDS), a quasi-zenith satellite system (quasi-zenith satellite system, QZSS), and/or a satellite based augmentation system (satellite based augmentation systems, SBAS).

The electronic device 100 may implement a display function through the GPU, the display 194, the application processor, and the like. The GPU is a microprocessor for image processing and connects the display 194 and the application processor. The GPU is configured to perform mathematical and geometric computing for graphics rendering. The processor 110 may include one or more GPUs that perform program instructions to generate or change display information.

The display 194 is configured to display an image, a video, or the like. The display 194 may include a display panel. The display panel may use a liquid crystal display (liquid crystal display, LCD), an organic light-emitting diode (organic light-emitting diode, OLED), an active-matrix organic light emitting diode (active-matrix organic light emitting diode, AMOLED), a flex light-emitting diode (flex light-emitting diode, FLED), a mini-LED, a micro-LED, a micro-OLED, a quantum dot light emitting diode (quantum dot light emitting diode, QLED), or the like. In some embodiments, the electronic device 100 may include 1 or N displays 194, where N is a positive integer greater than 1.

The display 194 may further be a foldable screen. The display 194 may include, but is not limited to, an inward-foldable screen, an outward-foldable screen, and a flip-style foldable screen.

The electronic device 100 may implement a photographing function by using the ISP, the camera 193, the video encoder and decoder, the GPU, the display 194, the application processor, and the like.

The ISP is configured to handle data returned by the camera 193. For example, during photographing, a shutter is opened, and light is transmitted to a photosensitive element of the camera through a lens. An optical signal is converted into an electrical signal. The photosensitive element of the camera transmits the electrical signal to the ISP for processing, to convert the electrical signal into an image visible to naked eyes. The ISP may further perform algorithm optimization on noise and brightness of the image. The ISP may further optimize parameters such as exposure and a color temperature of a photographing scene. In some embodiments, the ISP may be provided in the camera 193.

The camera 193 is configured to capture a still image or video. An optical image of an object is generated through a lens and is projected onto a photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transfers the electrical signal to the ISP to convert the electrical signal into a digital image signal. The ISP outputs the digital image signal to the DSP for processing. The DSP converts the digital image signal into an image signal in standard RGB and YUV formats. In some embodiments, the electronic device 100 may include 1 or N cameras 193, where N is a positive integer greater than 1.

The electronic device 100 may include one or more front-facing cameras and one or more rear-facing cameras.

The digital signal processor is configured to process a digital signal, and may process another digital signal in addition to a digital image signal. For example, when the electronic device 100 selects a frequency, the digital signal processor is configured to perform Fourier transform, and the like on frequency energy.

The video encoder and decoder are configured to compress or decompress a digital video. The electronic device 100 can support one or more types of video encoders and decoders. In this way, the electronic device 100 may play or record videos in a plurality of encoding formats, for example, moving picture experts group (moving picture experts group, MPEG) 1, MPEG 2, MPEG 3, and MPEG 4.

The NPU is a neural network (neural-network, NN) computing processor to quickly process input information by learning from a structure of a biological neural network, for example, a mode of transmission between neurons in a human brain, and to further continuously perform self-learning. Applications such as intelligent cognition of the electronic device 100, for example, image recognition, facial recognition, voice recognition, and text understanding, may be implemented by using the NPU.

The internal memory 121 may be one or more random access memories (random access memory, RAM), and one or more non-volatile memories (non-volatile memory, NVM).

The random access memory may include a static random-access memory (static random-access memory, SRAM), dynamic random access memory (dynamic random access memory, DRAM), a synchronous dynamic random access memory (synchronous dynamic random access memory, SDRAM), a double data rate synchronous dynamic random access memory (double data rate synchronous dynamic random access memory, DDR SDRAM, for example, the fifth DDR SDRAM is usually known as DDR5 SDRAM), and the like. The non-volatile memory may include a magnetic disk storage device, and a flash memory (flash memory).

The flash memory may be divided into NOR FLASH, NAND FLASH, 3D NAND FLASH, and the like according to an operation principle, or may be divided into a single-level cell (single-level cell, SLC), a multi-level cell (multi-level cell, MLC), a triple-level cell (triple-level cell, TLC), a quad-level cell (quad-level cell, QLC), and the like according to a quantity of voltage levels per cell, or may be divided into a universal flash storage (universal flash storage, UFS), an embedded multimedia card (embedded multi media Card, eMMC), and the like according to a storage specification.

The random access memory may be directly read and written by the processor 110, may be configured to store executable programs (for example, machine instructions) of an operating system or other running programs, or may be configured to store data of users and applications.

The non-volatile memory may also store executable programs, data of users and applications, and the like, and may be loaded into the random access memory in advance for the processor 110 to perform direct reading and writing.

The external memory interface 120 may be configured to connect to an external non-volatile memory, to extend a storage capability of the electronic device 100. The external non-volatile memory communicates with the processor 110 via the external memory interface 120, to implement a data storage function. For example, a file such as music or a video is stored in the external non-volatile memory.

The electronic device 100 may implement audio functions, for example, music playing and recording, by using the audio module 170, the speaker 170A, the telephone receiver 170B, the microphone 170C, the headset jack 170D, and the application processor. For example, music playback or audio recording is implemented.

The audio module 170 is configured to convert digital audio information into analog audio signal for output, and is also configured to convert analog audio input into a digital audio signal. The audio module 170 may be further configured to encode and decode the audio signal. In some embodiments, the audio module 170 may be arranged in the processor 110, or some functional modules of the audio module 170 are arranged in the processor 110.

The speaker 170A, alternatively referred to as a "loudspeaker", is configured to convert an electrical audio signal to a sound signal. The electronic device 100 may be used to listen to music or answer a call in a hands-free mode by using the speaker 170A.

The telephone receiver 170B, also referred to as an "earpiece", is configured to convert an audio electrical signal into a sound signal. When the electronic device 100 is configured to answer a call or receive a voice message, the telephone receiver 170B may be put close to a human ear to receive a voice.

The microphone 170C, also referred to as a "mike" or a "mic", is configured to convert a sound signal into an electrical signal. When making a call or sending a voice message, a user may make a sound near the microphone 170C through the mouth of the user, to input a sound signal to the microphone 170C. At least one microphone 170C may be disposed in the electronic device 100. In some other embodiments, two microphones 170C may be disposed in the electronic device 100, to capture a sound signal and implement a noise reduction function. In some other embodiments, three, four, or more microphones 170C may alternatively be disposed in the electronic device 100, to capture a sound signal, implement noise reduction, recognize a sound source, implement a directional recording function, and the like.

The headset jack 170D is configured to be connected to a wired headset. The headset jack 170D may be the USB interface 130, or may be a 3.5 mm open mobile terminal platform (open mobile terminal platform, OMTP) standard interface or a cellular telecommunications industry association of the USA (cellular telecommunications industry association of the USA, CTIA) standard interface.

The pressure sensor 180A is configured to sense a pressure signal, and may convert the pressure signal to an electrical signal. In some embodiments, the pressure sensor 180A may be arranged at the display 194. The pressure sensor 180A may be of any type. For example, it is a resistive pressure sensor, an inductive pressure sensor, or a capacitive pressure sensor. The capacitive pressure sensor may include at least two parallel plates made of a conductive material. When force is applied onto the pressure sensor 180A, capacitance between electrodes changes. The electronic device 100 determines strength of pressure based on the change in the capacitance. When a touch operation is performed on the display 194, the electronic device 100 detects intensity of the touch operation based on the pressure sensor 180A. The electronic device 100 may also calculate a touch position based on a detection signal of the pressure sensor 180A. In some embodiments, touch operations acting on a same touch position but with different touch operation intensities may correspond to different operation instructions. For example, when a touch operation whose touch operation intensity is less than a first pressure threshold is performed on an SMS message application icon, an instruction for viewing an SMS message is executed. When a touch operation with a touch operation strength greater than or equal to the first pressure threshold is performed on the short message application icon, an instruction of creating a new short message is executed.

The gyroscope sensor 180B may be configured to determine a moving posture of the electronic device 100. In some embodiments, angular velocities of the electronic device 100 around three axes (namely, an x axis, a y axis, and a z axis) may be determined by using the gyroscope sensor 180B. The gyroscope sensor 180B may be used for image stabilization during shooting. For example, when the shutter is pressed, the gyroscope sensor 180B detects an angle of jitter of the electronic device 100, and calculates a distance to be compensated by a lens module needs to compensate based on the angle, and allows the lens to cancel the jitter of the electronic device 100 through reverse motion, thereby implementing image stabilization. The gyroscope sensor 180B may be further used in scenarios of navigation and a motion sensing game.

The barometric pressure sensor 180C is configured to measure a barometric pressure. In some embodiments, the electronic device 100 calculates an altitude through an air pressure value measured by the barometric pressure sensor 180C, to assist in positioning and navigation.

The magnetic sensor 180D includes a Hall sensor. The electronic device 100 may detect opening and closing of a flip leather case by the magnetic sensor 180D. In some embodiments, when the electronic device 100 is a clamshell phone, the electronic device 100 may detect opening and closing of a flip cover according to the magnetic sensor 180D. Features such as automatic unlocking of the flip cover are further set according to the detected opening and closing state of the holster or opening and closing state of the flip cover.

The acceleration sensor 180E may detect magnitudes of acceleration in various directions (usually on three axes) of the electronic device 100, and may detect a magnitude and a direction of gravity when the electronic device 100 is still. The acceleration sensor 180E may be further configured to recognize a pose of the electronic device, and is used in applications such as switchover between a landscape mode and a portrait mode and a pedometer.

The distance sensor 180F is configured to measure a distance. The electronic device 100 may measure the distance by using infrared or lasers. In some embodiments, in a shooting scenario, the electronic device 100 may measure a distance by using the distance sensor 180F, to implement quick focusing.

The optical proximity sensor 180G may include, for example, a light-emitting diode (LED) and a light detector such as a photodiode. The light-emitting diode may be an infrared light-emitting diode. The electronic device 100 emits infrared light to the outside by using the light-emitting diode. The electronic device 100 uses the photodiode to detect reflected infrared light from a nearby object. When sufficient reflected light is detected, the electronic device may determine that there is an object near the electronic device 100. When detecting insufficient reflected light, the electronic device 100 may determine that there is no object near the electronic device 100. The electronic device 100 may detect, by using the optical proximity sensor 180G, that the user holds the electronic device 100 close to an ear for a call, to implement automatic screen-off to save power. The optical proximity sensor 180G may alternatively be used in a leather case mode or a pocket mode to automatically unlock or lock a screen.

The ambient light sensor 180L is configured to sense ambient light brightness. The electronic device 100 may adaptively adjust luminance of the display 194 based on the sensed ambient light luminance. The ambient light sensor 180L may be further configured to automatically adjust white balance during photographing. The ambient light sensor 180L may also cooperate with the optical proximity sensor 180G to detect whether the electronic device 100 is in a pocket to prevent a false touch.

The fingerprint sensor 180H is configured to collect a fingerprint. The electronic device 100 may implement functions such as unlocking, accessing an application lock, photographing, and answering a call by using a collected fingerprint feature.

A temperature sensor 180J is configured to detect a temperature. In some embodiments, the electronic device 100 executes a temperature processing policy based on the temperature detected by the temperature sensor 180J. For example, when the temperature reported by the temperature sensor 180J exceeds a threshold, the electronic device 100 lowers performance of a processor located near the temperature sensor 180J, to reduce power consumption and implement thermal protection. In some other embodiments, when the temperature is less than another threshold, the electronic device 100 heats the battery 142, to prevent the electronic device 100 from being abnormally powered off due to a low temperature. In some other embodiments, when the temperature is lower than still another threshold, the electronic device 100 boosts an output voltage of the battery 142 to prevent abnormal shutdown caused by a low temperature.

The touch sensor 180K is alternatively referred to as a "touch device". The touch sensor 180K may be disposed on the display 194. The touch sensor 180K and the display 194 form a touchscreen, also referred to as a "touch control screen". The touch sensor 180K is configured to detect a touch operation performed on or near the touch sensor 180K. The touch sensor may transfer the detected touch operation to the application processor to determine a type of a touch event. A visual output related to the touch operation may be provided by using the display 194. In some other embodiments, the touch sensor 180K may be alternatively disposed on the surface of the electronic device 100 in a position different from that of the display 194.

The bone conduction sensor 180M may obtain a vibration signal. In some embodiments, the bone conduction sensor 180M may collect a vibration signal of a vibration bone of a human vocal-cord part. The bone conduction sensor 180M may also contact a body pulse to receive a blood pressure beating signal. In some embodiments, the bone conduction sensor 180M may also be disposed in the headset, to combine into a bone conduction headset. The audio module 170 may parse out a voice signal based on the vibration signal of the vibration bone of the vocal-cord part that is collected by the bone conduction sensor 180M, to implement a voice function. The application processor may parse heart rate information based on the blood pressure pulsation signal collected by the bone conduction sensor 180M, to implement a heart rate measurement function.

The button 190 includes a power button, a volume button, or the like. The button 190 may be a mechanical button, or may be a touch button. The electronic device 100 may receive button input, and generate button signal input related to user settings and function control of the electronic device 100.

The motor 191 may generate a vibrating alert. The motor 191 may be used for an incoming call vibration prompt or for a touch vibration feedback. For example, touch operations performed on different applications (for example, photographing and audio playing) may correspond to different vibration feedback effects. For touch operations performed in different regions of the display 194, the motor 191 may also correspond to different vibration feedback effects. Different application scenarios (for example, a time reminder, information receiving, an alarm clock, and a game) may also correspond to different vibration feedback effects. A touch vibration feedback effect may be further customized.

The indicator 192 may be an indicator light, and may be configured to indicate a charging status or a battery level change, or may be configured to indicate a message, a missed call, a notification, and the like.

The SIM card interface 195 is configured to connect to an SIM card. The SIM card may be inserted into the SIM card interface 195 or withdrawn from the SIM card interface 195, to implement contact with or separation from the electronic device 100. The electronic device 100 may support 1 or N SIM card interfaces, N being a positive integer greater than 1. The SIM card interface 195 can support a Nano SIM card, a Micro SIM card, a SIM card, and the like. Multiple cards may be inserted into the same SIM card interface 195 at the same time. The plurality of cards may be of the same type or different types. The SIM card interface 195 may be further compatible with SIM cards of different types. The SIM card interface 195 may be further compatible with an external storage card. The electronic device 100 interacts with a network through the SIM card, to implement functions such as a call and data communication. In some embodiments, the electronic device 100 uses an eSIM, namely, an embedded SIM card. The eSIM card may be embedded into the electronic device 100 and cannot be separated from the electronic device 100.

A software system of the electronic device 100 may use a layered architecture, an event-driven architecture, a micro kernel architecture, a micro service architecture, or a cloud architecture. In the embodiments of the present invention, an Android system with a layered architecture is used as an example to describe a software structure of the electronic device 100.

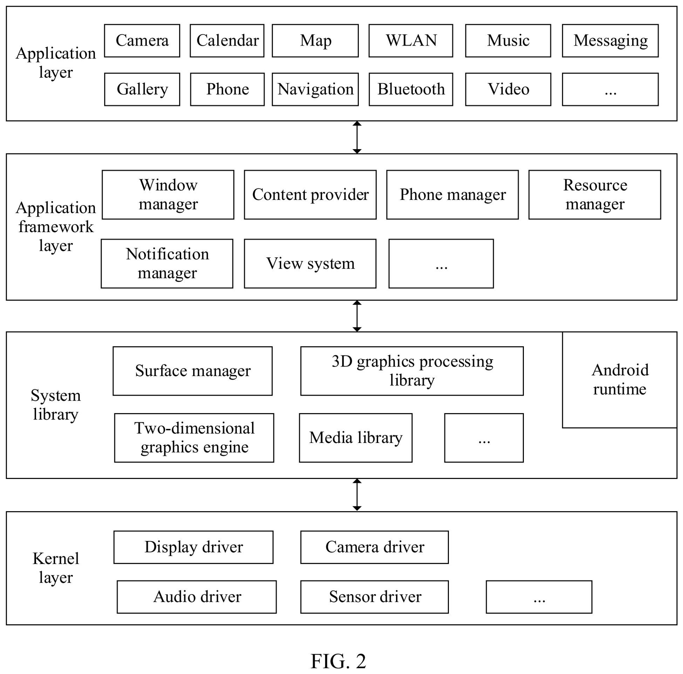

FIG. 2 is a block diagram of the software structure of the electronic device 100 according to an embodiment of the present invention.

In the layered architecture, software is divided into several layers, and each layer has a clear role and task. Layers communicate with each other through a software interface. In some embodiments, the Android system is divided into four layers from top to bottom: an application layer, an application framework layer, an Android runtime (Android runtime) and system library, and a kernel layer.

The application program layer may include a series of application program packages.

As shown in FIG. 2, the application packages may include applications such as Camera, Gallery, Calendar, Call, Map, Navigation, WLAN, Bluetooth, Music, Video, and Messages.

The application framework layer provides an application programming interface (application programming interface, API) and a programming framework for an application at the application layer. The application framework layer includes some predefined functions.

As shown in FIG. 2, the application framework layer may include a window manager, a content provider, a view system, a phone manager, a resource manager, a notification manager, and the like.

The window manager is configured to manage a window application. The window manager may obtain a size of a display, determine whether a status bar exists, lock a screen, take a screenshot, and so on.

The content provider is configured to store and obtain data, and enable the data to be accessible to an application. The data may include a video, an image, audio, calls that are made and answered, a browsing history and a bookmark, a phone book, and the like.

The view system includes visual controls such as a text display control and a picture display control. The view system may be configured to construct an application. A display interface may be composed of one or more views. For example, a display interface including an SMS message notification icon may include a view for displaying text and a view for displaying a picture.

The phone manager is configured to provide the electronic device 100 with a communication function, for example, call status management (including connecting, hanging-up, and the like).

The resource manager provides various resources for an application, such as a localized string, an icon, a picture, a layout file, and a video file.

The notification manager enables an application to display notification information in a status bar, may be configured to convey a notification-type message, and may automatically disappear after a short stay without user interaction. For example, the notification manager is configured to provide a notification of download completion, a message notification, and the like. The notification manager may alternatively be a notification that appears in a top status bar of a system in a form of a graph or scroll bar text, for example, a notification of an application running in the background, or a notification that appears on a screen in a form of a dialog window. For example, text information appears in the state bar for prompt, a prompt tone is made, the electronic device vibrates, or an indicator light flashes.

The Android Runtime includes a kernel library and a virtual machine. The Android runtime is responsible for scheduling and managing the Android system.

The kernel library includes two parts: one part is a performance function that a java language needs to invoke, and the other part is a kernel library of android.

The application program layer and the application program framework layer run in the virtual machine. The virtual machine executes java files at the application program layer and the application program framework layer as binary files. The virtual machine is used to execute functions such as object lifecycle management, stack management, thread management, security and exception management, and garbage collection.

The system library may include a plurality of functional modules for example, a surface manager (surface manager), a media library (Media Libraries), a three-dimensional graphics processing library (for example, OpenGL ES), and a 2D graphics engine (for example, an SGL).

The surface manager is configured to manage a display subsystem, and provide 2D and 3D layer fusion for a plurality of applications.

The media library supports playback and recording in a plurality of common audio and video formats, a still image file, and the like. The media library may support a plurality of audio and video encoding formats, such as MPEG4, H.264, MP3, AAC, AMR, JPG, and PNG.

The three-dimensional graphics processing library is configured to implement three-dimensional graphics drawing, image rendering and composition, layer processing, and the like.

The 2D graphics engine is a drawing engine for 2D graphics drawing.

The kernel layer is a layer between hardware and software. The kernel layer includes at least a display drive, a camera drive, an audio drive, and a sensor drive.

The following describes a form of an electronic device 100.

The electronic device 100 provided in this application may be an outward-foldable screen or a flip-style foldable screen.

**I. Outward-foldable screen**

The outward-foldable screen may include three display modes: an unfolded state, an intermediate state, and a folded state.

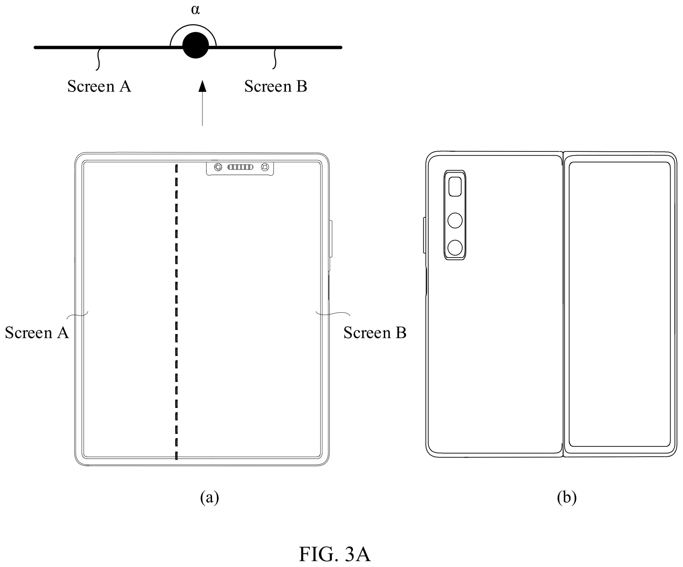

(a) and (b) of FIG. 3A show the display mode of the outward-foldable screen in the unfolded state.

(a) of FIG. 3A shows an example of a front view of the outward-foldable screen in the unfolded state. When the outward-foldable screen is in the unfolded state, a displayable screen of a foldable screen includes a screen A and a screen B. The screen A and the screen B may be one complete display, or may be two independent displays. For example, when an inward-foldable screen is in the unfolded state, an included angle $\alpha$ between the screen A and the screen B is greater than an angle 1 and less than or equal to 180°. For example, a value of the angle 1 may be between 170° and 180°. For example, if the value of the angle 1 is 180°, when the outward-foldable screen is in the unfolded state, the included angle $\alpha$ between the screen A and the screen B may be 180°.

As shown in (a) of FIG. 3A, a front-facing camera is displayed on the screen B, and a user may take a selfie via the front-facing camera.

(b) of FIG. 3A shows an example of a back view of the outward-foldable screen in the unfolded state. When the outward-foldable screen is in the unfolded state, the screen A and the screen B cannot perform display. This is different from a case of the inward-foldable screen being in the unfolded state.

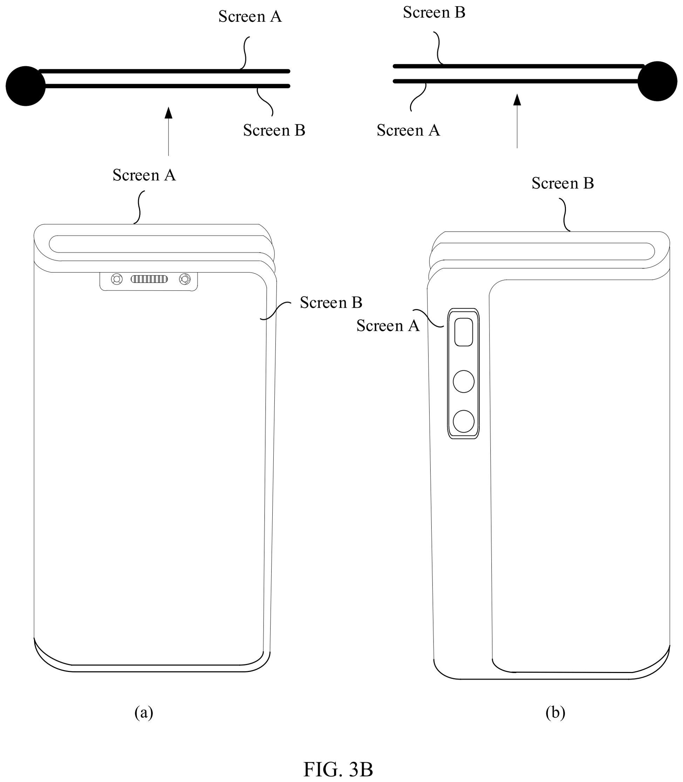

FIG. 3B shows a display mode of the outward-foldable screen in the folded state.

As shown in (a) of FIG. 3B, when the outward-foldable screen is in the folded state, the screen A and the screen B are disposed relative to each other. For example, when the outward-foldable screen is in the folded state, the screen B is in a screen-on state, the screen A is in a screen-off state, and the included angle $\alpha$ between the screen A and the screen B is greater than or equal to 0° and less than an angle 2. For example, a value of the angle 2 may be between 0° and 10°. For example, if the value of the angle 2 is 0°, when the outward-foldable screen is in the folded state, the included angle $\alpha$ between the screen A and the screen B may be 0°. When the screen B is in the screen-on state, the user may take a selfie via the front-facing camera.

As shown in (b) of FIG. 3B, when the outward-foldable screen is in the folded state, the screen B and the screen A are disposed relative to each other. For example, when the outward-foldable screen is in the folded state, the screen B is in the screen-off state, the screen A is in the screen-on state, and the included angle $\alpha$ between the screen A and the screen B is greater than or equal to 0° and less than the angle 2. For example, the value of the angle 2 may be between 0° and 10°. For example, if the value of the angle 2 is 0°, when the outward-foldable screen is in the folded state, the included angle $\alpha$ between the screen A and the screen B may be 0°. When the screen A is in the screen-on state, the user may take a selfie via a rear-facing camera.

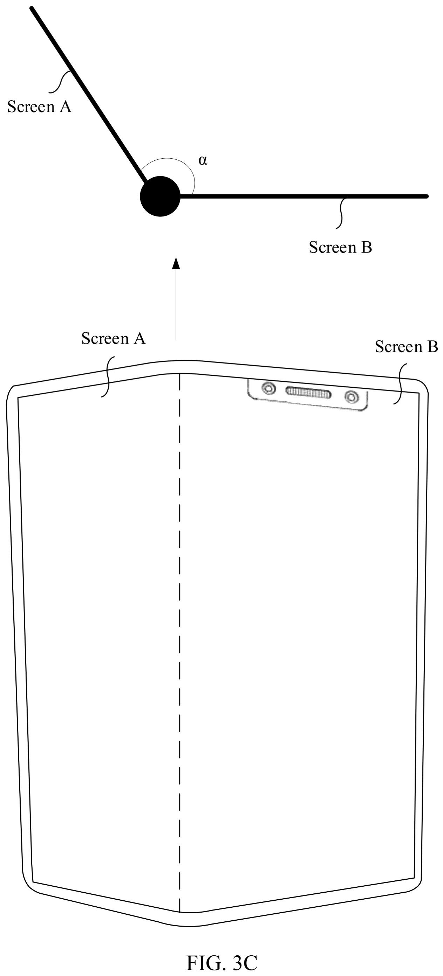

FIG. 3C shows a display mode of the outward-foldable screen in the intermediate state.

The intermediate state is a folded state that the outward-foldable screen is bent, in a direction opposite to the screen A and the screen B, into an included angle that has a specific angle. When the outward-foldable screen is in the intermediate state, the displayable screen of the foldable screen includes the screen A and the screen B, and the included angle $\alpha$ between the screen A and the screen B is greater than or equal to the angle 2 and less than or equal to the angle 1. For example, the included angle $\alpha$ between the screen A and the screen B may be 120°.

In some embodiments, the screen B may be referred to as a first display, and the screen A may be referred to as the first display.

## II. Flip-style foldable screen

The flip-style foldable screen may include three display modes: an unfolded state, an intermediate state, and a folded state.

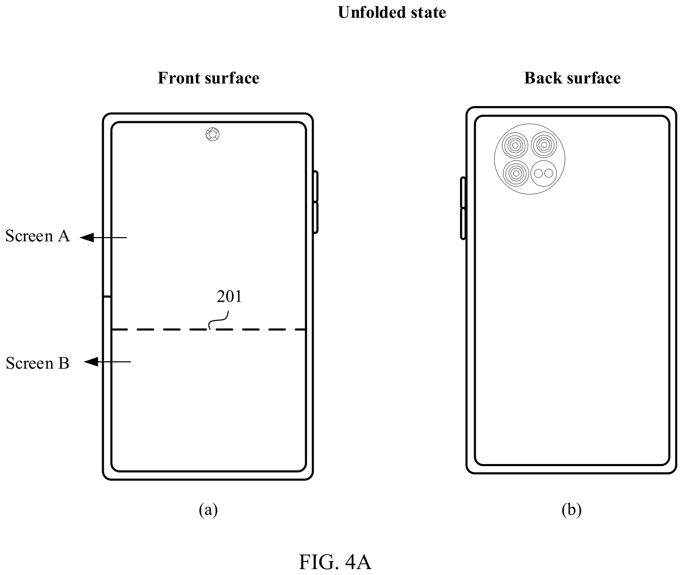

FIG. 4A is a schematic diagram of an electronic device 100 in an unfolded state.

(a) of FIG. 4A shows a front view of the electronic device 100 in the unfolded state. As shown in (a) ofFIG. 4A, the electronic device 100 includes a screen A, a screen B, and a folding line 201.

Optionally, the screen A and the screen B may be one complete display.

In the unfolded state, the screen A and the screen B are facing the user, and an included angle between the screen A and the screen B is approximately 180°. That is, a plane at which the screen A is located and a plane at which the screen B is located are on a same horizontal plane. In the unfolded state, the electronic device 100 may simultaneously display an image on both the screen A and the screen B. In this way, the user may simultaneously view the image on both the screen A and the screen B.

(b) of FIG. 4 A shows a back view of the electronic device 100 in the unfolded state. As shown in (b) of FIG. 4A, the electronic device 100 includes a rear-facing camera.

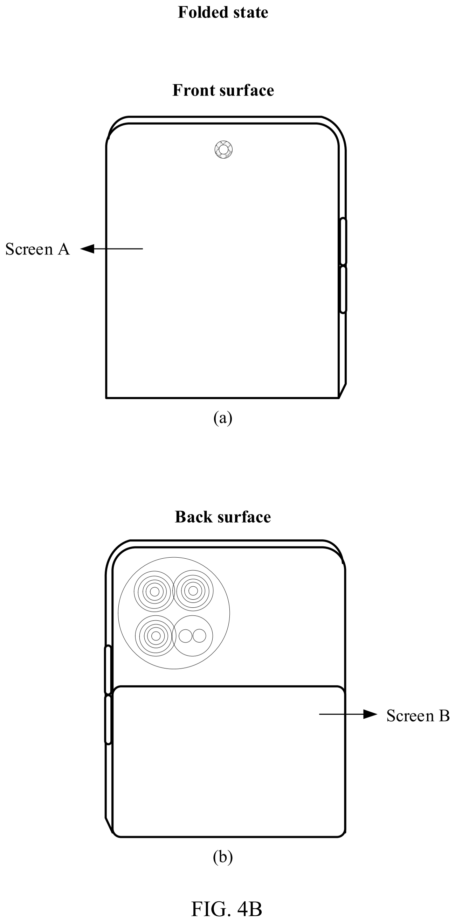

(a) of FIG. 4B shows a front view of the electronic device 100 in the folded state. (b) of FIG. 4B shows a back view of the electronic device 100 in the folded state.

As shown in (a) of FIG. 4B and (b) of FIG. 4B, in the folded state, an included angle between the plane at which the screen A is located and the plane at which the screen B is located is approximately 0°, and the screen A and the screen B are disposed relative to each other. For example, when the electronic device 100 is in the folded state, the screen A is in a screen-on state, and the screen B is in a screen-off state. Alternatively, when the electronic device 100 is in the folded state, the screen B is in a screen-on state, and the screen A is in a screen-off state.

In some embodiments, the screen B may be referred to as a first display, and the screen A may be referred to as the first display.

In this embodiment of this application, the outward-foldable screen is used as an example for description. This application is also applicable to the flip-style foldable screen.

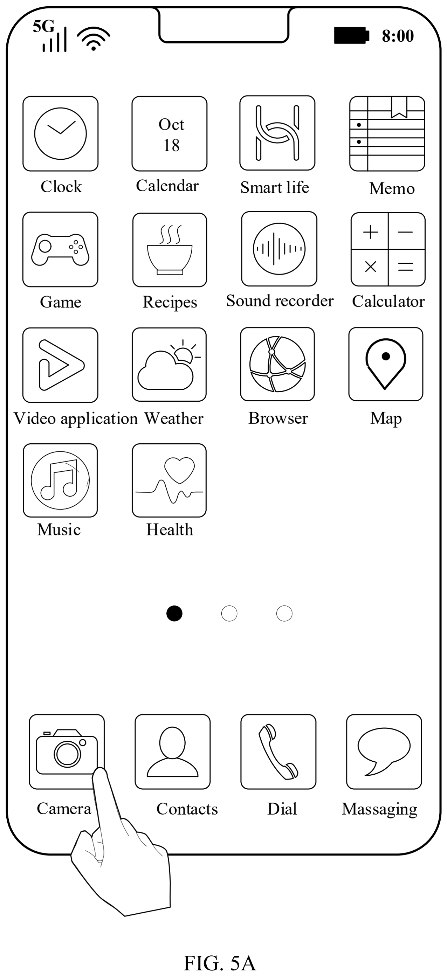

FIG. 5A to FIG. 5C are a schematic diagram of a user switching between a front-facing camera and a rear-facing camera for a selfie operation.

For example, when an electronic device 100 is in a folded state, a screen A of the electronic device 100 is in a screen-on state, and a screen B of the electronic device 100 is in a screen-off state. A user may take a selfie via a camera on the screen A, and the electronic device 100 may display a selfie image on the screen A.

For example, FIG. 5A shows a main interface of the electronic device 100. A main home screen of the electronic device 100 includes a plurality of application icons, for example, a clock application icon, a calendar application icon, a smart life application icon, a memo application icon, a game application icon, a recipes application icon, a sound recorder application icon, a calculator application icon, a video application icon, a weather application icon, a browser application icon, a map application icon, a music application icon, a health application icon, and the like. A page indicator is further displayed below the plurality of application icons, to indicate a total number of home screens, a position of a leftmost home screen, a position of a currently displayed home screen, and a position relationship between a current home screen and another home screen. A tray region or a dock bar (Dock bar) is displayed below the page indicator. The tray region includes a plurality of tray icons, for example, a camera application icon, a contacts application icon, a phone application icon, and a messages application icon. The tray region remains displayed during page switching. In some embodiments, the page indicator and the tray icon are optional, which is not limited in this embodiment of this application.

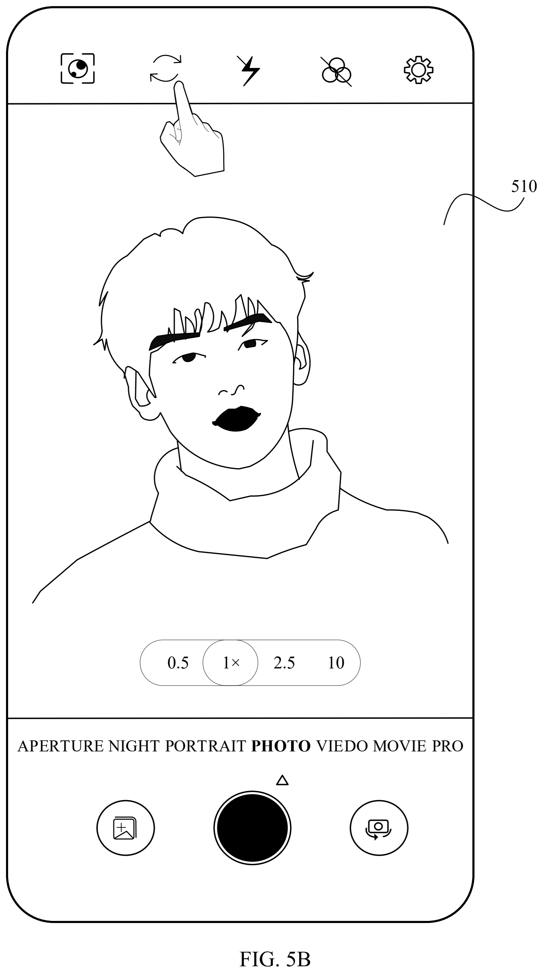

As shown in FIG. 5A, the electronic device 100 may receive an input operation (for example, a single tap) performed on the camera application icon by the user. In response to the input operation, the electronic device 100 may display a user interface 510 shown in FIG. 5B. The user interface 510 is a user interface of a shooting and display service provided by the electronic device 100 according to an embodiment of this application, and is also referred to as a preview interface.

As shown in FIG. 5B, the preview interface may include a mode bar, a shooting control, a preview window, a playback control, and a front-facing/rear-facing camera switching option.

The mode bar may include a plurality of shooting mode options, for example, "NIGHT", "PORTRAIT", "PHOTO", and "VIDEO". Different shooting modes may provide shooting services with different effects for the user. The user may select any one of a plurality of shooting modes based on different requirements to shoot. For example, "PHOTO" may be a default shooting mode, and is used to shoot a photo. "VIDEO" is used to record a video. The "NIGHT" mode is applicable to a shooting scene with relatively dim light, for example, at night. The "PORTRAIT" mode is applicable to a shooting scene in which a subject to be photographed is a character. The electronic device 100 may further provide more shooting modes, for example, "APERTURE", "MOVIE", and "PRO". Examples are not enumerated herein for description.

The electronic device 100 may detect a user operation performed on the shooting mode option in the mode bar, and change a currently used shooting mode based on the user operation. The user operation is, for example, a leftward/rightward sliding operation. For example, when it is detected that the mode bar is dragged to slide leftward (a leftward sliding operation) and a floating icon is made to stop at the "PORTRAIT" option, the electronic device 100 may switch to the "PORTRAIT" mode. By default, the electronic device 100 first uses the "PHOTO" mode.

The shooting control is used to trigger photographing. The electronic device 100 may detect whether there is a user operation, for example, a tap operation, performed on the shooting control. After detecting a user operation performed on the shooting control, the electronic device 100 may generate a photographing instruction. The electronic device 100 may obtain, based on the photographing instruction, an image reported by a camera at a corresponding timestamp, and then store the image as a photo.

The preview window may be used to display, in real time, the image reported by the camera. In different shooting modes, the electronic device 100 may process the image reported by the camera, to improve display effect of the image. For example, in the "PORTRAIT" mode, the electronic device 100 may blur a background in the image reported by the camera, to highlight a portrait. Herein, images processed by using image processing algorithms corresponding to different shooting modes may be displayed in the preview window in real time, so that the user can perceive, in real time, shooting effects corresponding to the different shooting modes. An image shown in FIG. 5B is a human face image captured by a front-facing camera of the electronic device 100.

The playback control may be used to browse a thumbnail of a shot photo/video. After detecting a user operation performed on the playback control, the electronic device 100 may display a best photo corresponding to the thumbnail.

The preview interface further includes a shortcut function region. The shortcut function region may include a control of a SOLO CUT video recording mode, a selfie toggle control, a flash control, a color mode control, a settings control, and the like. The control of the SOLO CUT video recording mode may be used to trigger, when being enabled, the electronic device 100 to recognize a protagonist in a plurality of characters in a preview picture. The selfie toggle control may be used to switch between a selfie mode by using the front-facing camera and a selfie mode by using the rear-facing camera. For example, when it is currently in the selfie mode of the front-facing camera, and the selfie toggle control is tapped on the electronic device 100, the electronic device 100 activates the rear-facing camera, and displays, on the screen B, an image captured by the rear-facing camera. The flash control may be used to trigger the electronic device 100 to enable or disable a flash. The color mode control may be used to trigger the electronic device 100 to use a color filter to process an image captured by the camera.

The front-facing/rear-facing camera switching option may be used to receive a user operation to switch between the front-facing camera and the rear-facing camera. For example, the electronic device 100 may receive an input operation performed on the front-facing/rear-facing camera switching option by the user, and display, on the screen A, the image captured by the rear-facing camera.

For example, as shown in FIG. 5B, the electronic device 100 may receive an input operation (for example, a single tap) performed on the selfie toggle control in the user interface 510 by the user. In response to the input operation of the user, the electronic device 100 may activate the rear-facing camera, to turn on the screen B, and display, on the screen B, the image captured by the rear-facing camera.

The user may flip the electronic device 100 through 180°, to enable the screen B of the electronic device 100 to be facing the user, and enable the screen A of the electronic device 100 to be facing away from the user. In this case, the rear-facing camera of the electronic device 100 may capture a human face image of the user, and display the human face image on the screen B.

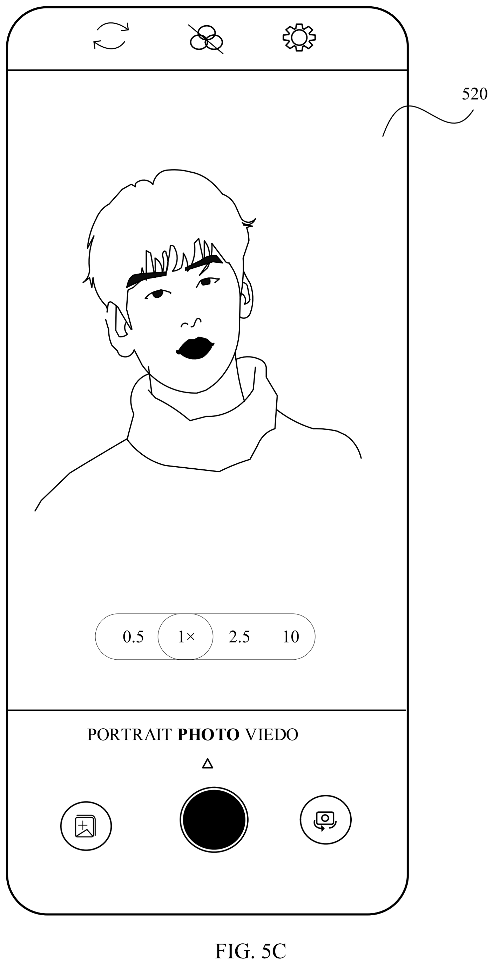

For example, as shown in FIG. 5C, the electronic device 100 may display, on the screen B, the user interface 520 shown in FIG. 5C. User interface 520 includes a mode bar, a shooting control, a preview window, a playback control, and a front-facing/rear-facing camera switching option.

The mode bar may include a plurality of shooting mode options, for example, "PORTRAIT", "PHOTO", and "VIDEO". Different shooting modes may provide shooting services with different effects for the user.

The user may select any one of a plurality of shooting modes based on different requirements to shoot. For example, "PHOTO" may be a default shooting mode, and is used to shoot a photo. "VIDEO" is used to record a video. The "PORTRAIT" mode is applicable to a shooting scene in which a subject to be photographed is a character.

The electronic device 100 may detect a user operation performed on the shooting mode option in the mode bar, and change a currently used shooting mode based on the user operation. The user operation is, for example, a leftward/rightward sliding operation. For example, when it is detected that the mode bar is dragged to slide leftward (a leftward sliding operation) and a floating icon is made to stop at the "PORTRAIT" option, the electronic device 100 may switch to the "PORTRAIT" mode. By default, the electronic device 100 first uses the "PHOTO" mode.

The shooting control is used to trigger photographing. The electronic device 100 may detect whether there is a user operation, for example, a tap operation, performed on the shooting control. After detecting a user operation performed on the shooting control, the electronic device 100 may generate a photographing instruction. The electronic device 100 may obtain, based on the photographing instruction, an image reported by a camera at a corresponding timestamp, and then store the image as a photo.

The preview window may be used to display, in real time, the image reported by the camera. In different shooting modes, the electronic device 100 may process the image reported by the camera, to improve display effect of the image. For example, in the "PORTRAIT" mode, the electronic device 100 may blur a background in the image reported by the camera, to highlight a portrait. Herein, images processed by using image processing algorithms corresponding to different shooting modes may be displayed in the preview window in real time, so that the user can perceive, in real time, shooting effects corresponding to the different shooting modes. The image shown in FIG. 5C is a human face image captured by the rear-facing camera of the electronic device 100.

The playback control may be used to browse a thumbnail of a shot photo/video. After detecting a user operation performed on the playback control, the electronic device 100 may display a best photo corresponding to the thumbnail.

The preview interface further includes a shortcut function region. The shortcut function region may include a selfie toggle control, a color mode control, a setting control, and the like. The selfie toggle control may be used to switch between a selfie mode by using the front-facing camera and a selfie mode by using the rear-facing camera. For example, when it is currently in the selfie mode of the rear-facing camera, and the selfie toggle control is tapped on the electronic device 100, the electronic device 100 deactivates the rear-facing camera after, and turns off the screen B. The color mode control may be used to trigger the electronic device 100 to use a color filter to process an image captured by the camera.

The front-facing/rear-facing camera switching option may be used to receive a user operation to switch between the front-facing camera and the rear-facing camera. For example, the electronic device 100 may receive the input operation performed on the front-facing/rear-facing camera switching option by the user, and display, on the screen B, the image captured by the front-facing camera.

It is not limited to switching, via the selfie toggle control, between the selfie mode by using the front-facing camera and the selfie mode by using the rear-facing camera. The user may further switch, via a gesture operation or a shortcut, between the selfie mode by using the front-facing camera and the selfie mode by using the rear-facing camera, which is not limited in this application.

It may be learned from FIG. 5A to FIG. 5C that, if the user takes a selfie using the rear-facing camera of the electronic device 100, the user needs to manually activate the rear-facing camera of the electronic device 100, flip the mobile phone, take a selfie using the rear-facing camera of the electronic device 100, and view, on the screen B, the human face image of the user captured by the rear-facing camera. This operation is relatively complex.

Based on this, this application provides a shooting method in which the electronic device 100 can recognize an intention of the user to use the rear-facing camera and automatically activate the rear-facing camera with no user operation. The electronic device 100 may display, on the screen B, the human face image captured by the rear-facing camera provided that the user flips the mobile phone. This improves selfie experience of the user.

In some embodiments, imaging quality of the rear-facing camera is higher than imaging quality of the front-facing camera. Imaging quality may include, but is not limited to: image clarity, image color, image noise, image jitter, and image exposure.

**Selfie scenario**

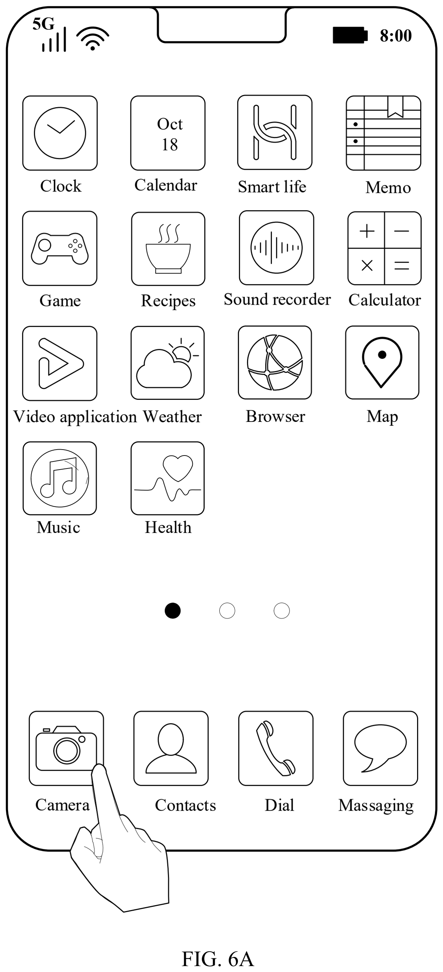

FIG. 6A to FIG. 6E are a schematic diagram of an electronic device 100 automatically activating a rear-facing camera and displaying, on a screen B, a human face image captured by the rear-facing camera.

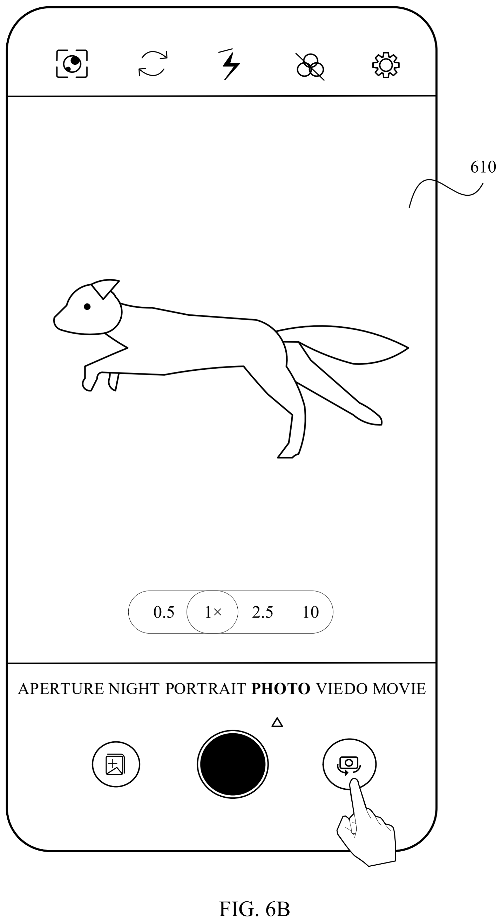

FIG. 6A shows a main interface of the electronic device 100. The electronic device 100 may receive an input operation (for example, a single tap) performed on a camera application icon in the main interface by a user. In response to the input operation of the user, the electronic device 100 may display a user interface 610 shown in FIG. 6B. The user interface 610 includes a mode bar, a shooting control, a preview window, a playback control, a front-facing/rear-facing camera switching option, and the like. In response to the input operation performed on the camera application icon in the main interface by the user, the electronic device 100 may activate the rear-facing camera, and an image displayed in the preview window in the user interface 610 is an image captured by the rear-facing camera of the electronic device 100.

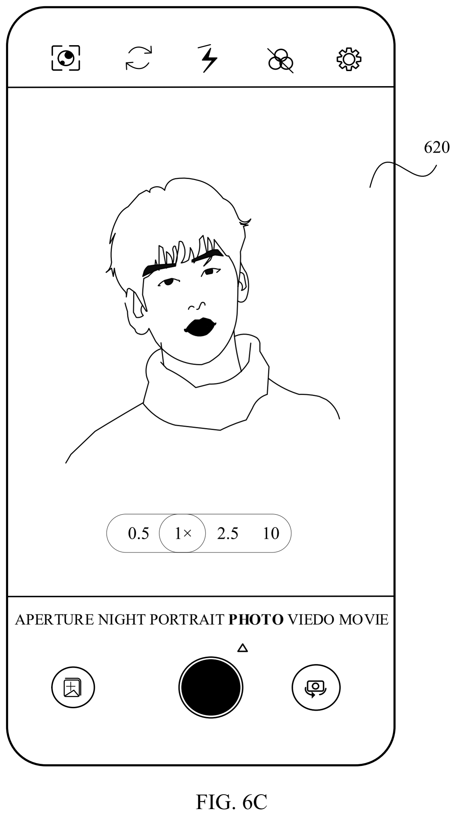

As shown in FIG. 6B, the electronic device 100 may receive a user input operation (for example, a single tap) performed on the front-facing/rear-facing camera switching option in the user interface 610. In response to the input operation of the user, the electronic device 100 may activate a front-facing camera, and display, in the preview window, a human face image captured by the front-facing camera shown in FIG. 6C.

In some embodiments, the input operation performed on the front-facing/rear-facing camera switching option in the user interface 610 by the user may be referred to as a first user operation.

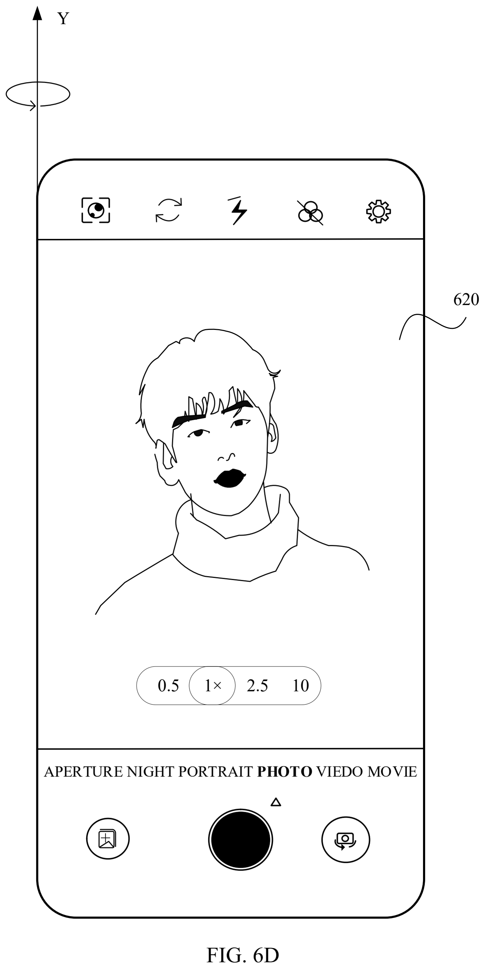

When the user expects to take a selfie using the rear-facing camera that has better imaging quality, the user may flip the electronic device 100 through 180° around a Y-axis shown in FIG. 6D, to enable a screen B of the electronic device 100 to be facing the user, and enable a screen A of the electronic device 100 to be facing away from the user. In this way, the rear-facing camera of the electronic device 100 may capture the human face image. When it is detected that the user needs to take a selfie using the rear-facing camera of the electronic device 100, the electronic device 100 may activate the rear-facing camera of the electronic device 100, and display, on the screen B, the image captured by the rear-facing camera of the electronic device 100.

In some embodiments, the user may flip the electronic device 100 through 180° around the Y-axis shown in FIG. 6D, to enable the screen B of the electronic device 100 to be facing the user. An operation of enabling the screen A of the electronic device 100 to be facing away from the user may be referred to as a second user operation.

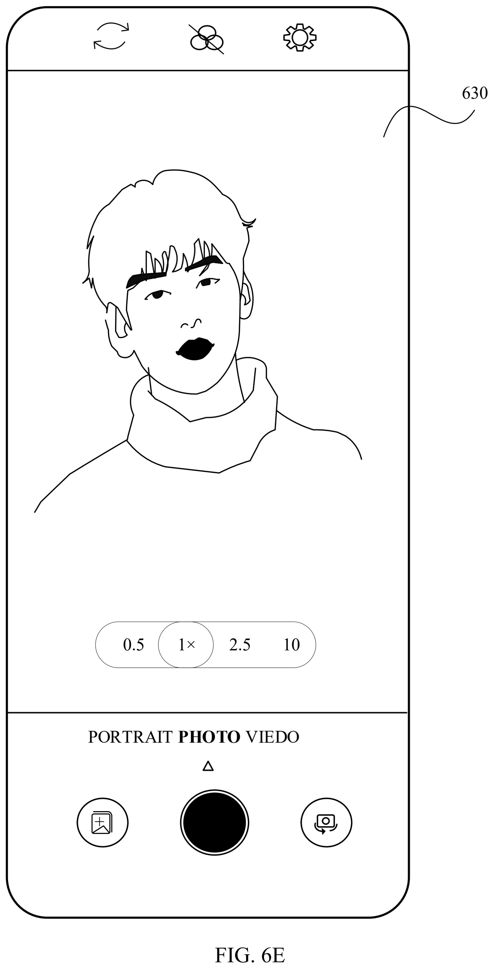

As shown in FIG. 6E, a user interface 630 shown in FIG. 6E is the user interface displayed on the screen B of the electronic device 100. As shown in FIG. 6E and FIG. 6C, a display region of the screen B is smaller than a display region of the screen A, and an area of the user interface 630 is smaller than an area of the user interface 620. The image displayed in the user interface 630 is the human face image captured by the rear-facing camera of the electronic device 100.

In this way, the electronic device 100 can recognize an intention of the user to take a selfie using the rear-facing camera, automatically activate the rear-facing camera for the user, and display, on the screen B, the image captured by the rear-facing camera. This reduces user operations, and improves shooting experience of the user.

**Recognize the intention of the user to take a selfie using the rear-facing camera.**

The following describes in detail how the electronic device 100 recognizes the intention of the user to take a selfie using the rear-facing camera.

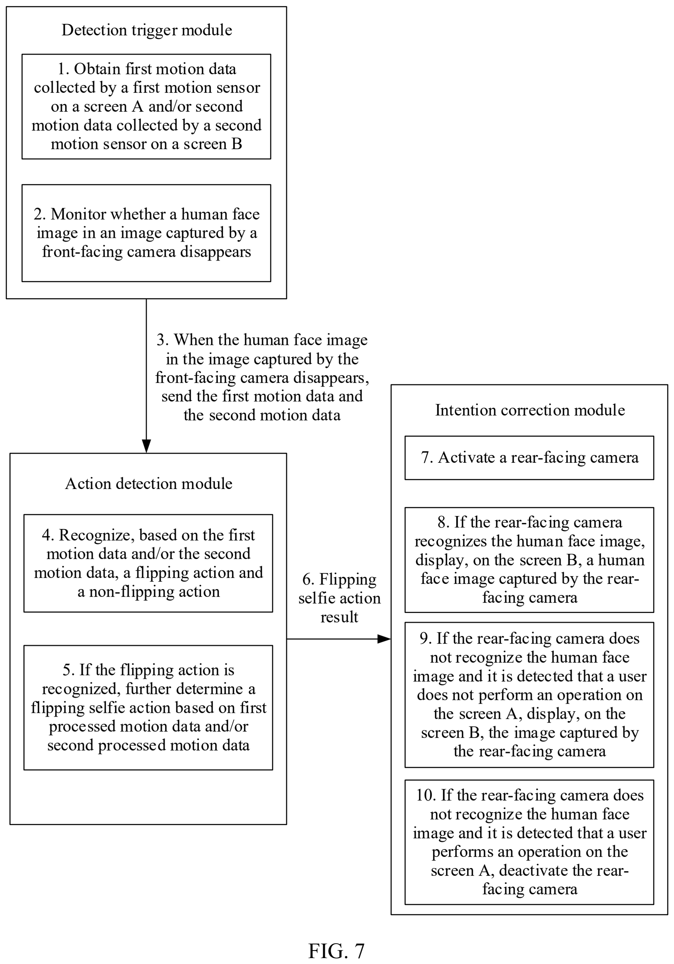

**FIG. 7 is a schematic diagram of a functional module according to this application.**

As shown in FIG. 7, a functional module on the electronic device 100 includes, but is not limited to: a detection trigger module, an action detection module, and an intention correction module.

The detection trigger module is enabled after a front-facing camera on the electronic device 100 is activated. When the front-facing camera on the electronic device 100 is not activated, that is, when it is detected that a user does not take a selfie, the detection trigger module may not be enabled, to reduce power consumption of the electronic device 100.

Optionally, the detection trigger module may further be enabled at all times, which is not limited in this application.

After the detection trigger module is enabled, the detection trigger module is used to obtain first motion data collected by a first motion sensor on a screen A and/or second motion data collected by a second motion sensor on a screen B.

In some embodiments, the first motion sensor and the second motion sensor may start collecting motion data only after the detection trigger module is enabled. The first motion sensor and the second motion sensor may also continuously collect the motion data, which is not limited in this application.

In a possible implementation, a motion sensor is disposed on only the screen A of the electronic device 100, and the detection trigger module may only obtain the first motion data collected by the first motion sensor on the screen A.

In a possible implementation, the motion sensor is disposed on only the screen B of the electronic device 100, and the detection trigger module may only obtain the second motion data collected by the second motion sensor on the screen B.

In a possible implementation, the motion sensor is disposed on both screen A and screen B of the electronic device 100, and the detection trigger module may obtain the first motion data collected by the first motion sensor on the screen A and the second motion data collected by the second motion sensor on the screen B. An action of the user flipping a mobile phone may be recognized via the dual motion sensors. This improves accuracy of recognizing the action that the user flips the mobile phone.

The first motion sensor may be an inertial measurement sensor (Inertial Measurement Unit, IMU), and may be used to recognize the action that the user flips the mobile phone. The first motion data may be acceleration data and angular velocity data collected by the inertial measurement sensor.

The second motion sensor may also be an inertial measurement sensor, and may be used to recognize the action that the user flips the mobile phone. The second motion data may also be the acceleration data and the angular velocity data collected by the inertial measurement sensor.

The detection trigger module may monitor whether a human face image in an image captured by the front-facing camera disappears. When the front-facing camera is activated and the human face image in the image captured by the front-facing camera does not disappear, the user is still taking a selfie using the front-facing camera, and the action detection module remains disabled.

When the front-facing camera is activated and the human face image in the image captured by the front-facing camera disappears, the user may flip the mobile phone, and the action detection module may be enabled. In addition, the detection trigger module obtains the first motion data and/or the second motion data, and sends the first motion data and/or the second motion data to the action detection module. The action detection module may determine, based on the first motion data and/or the second motion data, the action that the user flips the mobile phone.

After being enabled, the action detection module is used to receive the first motion data and/or the second motion data sent by the detection trigger module, and recognize, based on the first motion data and/or the second motion data, a flipping action and a non-flipping action.

If it is recognized that the action is the non-flipping action, the action detection module determines that the user does not intend to take a selfie using the rear-facing camera, and this process ends.

If it is recognized that the action is the flipping action, in some scenarios, the user may flip the mobile phone and place the mobile phone on a table or in a pocket. The action detection module may further need to determine whether the flipping action is a flipping selfie action or a flipping non-selfie action.

The action detection module is further used to determine that the action is the flipping selfie action, and send a recognized flipping selfie action result to the intention correction module.

The intention correction module is used to: after receiving the flipping selfie action result sent by the action detection module, determine or correct, based on human face detection and screen touch information, the flipping selfie action recognized by the action detection module, to determine whether to activate the rear-facing camera and turn on the screen B.

Optionally, the intention correction module may be enabled only after receiving the flipping selfie action result sent by the action detection module, to reduce power consumption of the electronic device 100. Optionally, the intention correction module may further be enabled at all times, which is not limited in this application.

The intention correction module is specifically used to: after receiving the flipping selfie action result sent by the action detection module, activate the rear-facing camera, and capture an image via the rear-facing camera. In this case, the electronic device 100 does not turn on the screen B, and whether the user takes a selfie using the rear-facing camera needs to be further determined based on the human face detection and the screen touch information.

Specifically, if the rear-facing camera recognizes the human face image, it indicates that the user is currently taking a selfie using the rear-facing camera, and the electronic device 100 turns on the screen B, and displays, on the screen B, an image captured by the rear-facing camera.

If the rear-facing camera does not recognize the human face image and it is detected that the user does not perform an operation on the screen A, it indicates that the user currently takes a selfie using the rear-facing camera with high probability, but the rear-facing camera does not capture the human face image, and the electronic device 100 turns on the screen B, and displays, on the screen B, the image captured by the rear-facing camera.

If the rear-facing camera does not recognize the human face image and it is detected that the user performs an operation on the screen A, it indicates that the user currently does not take selfie using the rear-facing camera, and the electronic device 100 does not turn on the screen B, and deactivates the rear-facing camera.

The following describes in detail working principles of the action detection module and the intention correction module.

First, the working principle of the action detection module is described.

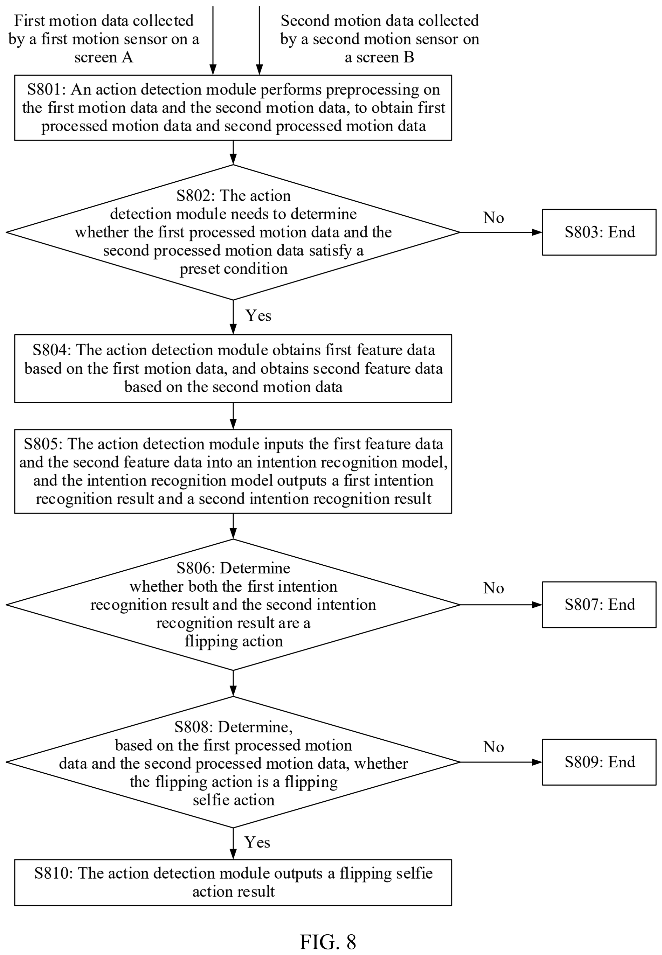

FIG. 8 is a schematic diagram of a working principle of the action detection module.

S801: An action detection module performs preprocessing on first motion data and second motion data, to obtain first processed motion data and second processed motion data.

After a detection trigger module detects that a human face image in an image captured by a front-facing camera disappears, the detection trigger module may send the first motion data and the second motion data to the action detection module. The action detection module may obtain the first motion data and the second motion data.

Optionally, the detection trigger module may further send only the first motion data or the second motion data to the action detection module. This application uses an example in which the detection trigger module simultaneously sends the first motion data and the second motion data to the action detection module for description, which does not constitute a limitation.

After the action detection module obtains the first motion data and the second motion data, the action detection module may perform preprocessing on the first motion data and the second motion data, to obtain the first processed motion data and the second processed motion data. Preprocessing includes, but is not limited to, filtering processing and the like. Filtering processing may be filtering, and filtering processing may further be other manners. This is not limited in this application. In this way, the action detection module performs preprocessing on the first motion data and the second motion data, to eliminate noise interference, enabling a signal to be smoother.

In some embodiments, an electronic device 100 may alternatively not perform S801. This is not limited in this application.

S802: The action detection module needs to determine whether the first processed motion data and the second processed motion data satisfy a first preset condition.

Before the first processed motion data and the second processed motion data are input to an intention recognition model, the action detection module may determine whether the first processed motion data and the second processed motion data satisfy the first preset condition. After the first preset condition is satisfied, the first processed motion data and the second processed motion data are input into the intention recognition model. When the first preset condition is not satisfied, the action detection module does not input the first processed motion data and the second processed motion data into the intention recognition model, to reduce workload of the intention recognition model, and reduce power consumption of the electronic device 100.

When it is determined that the first processed motion data and the second processed motion data satisfy the first preset condition, S804 is performed. When it is determined that the first processed motion data and the second processed motion data do not satisfy the first preset condition, S803 is performed.

The first preset condition may include, but is not limited to, one or more of the following:

> 1. Magnitudes of triaxial (an X-axis, a Y-axis, and a Z-axis) angular velocities are greater than a first value.

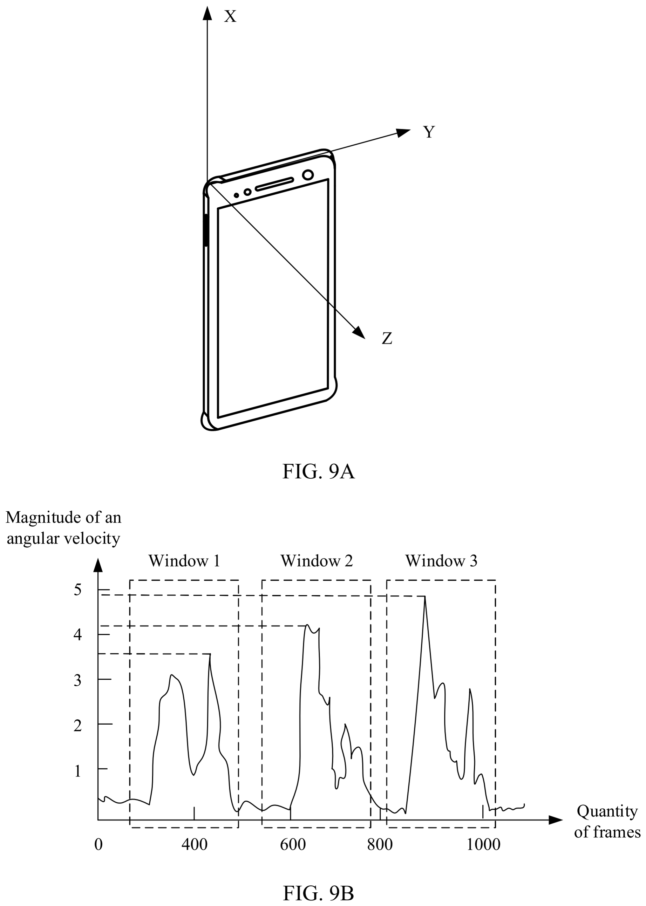

FIG. 9A is a schematic diagram of directions of the X-axis, the Y-axis, and the Z-axis.

In some embodiments, a coordinate system of the X-axis, the Y-axis, and the Z-axis shown in FIG. 9A may also be referred to as a carrier coordinate system.

As shown in FIG. 9A, a direction that is parallel to a left-side edge and a right-side edge of the electronic device 100 and that points to an upper-side edge of the electronic device 100 from a lower-side edge of the electronic device 100 is taken as a positive direction of the Y-axis. A direction that is parallel to the upper-side edge and the lower-side edge of the electronic device 100 and that points to the right-side edge of the electronic device 100 from the left-side edge of the electronic device 100 is taken as a positive direction of the X-axis. The positive direction of the X-axis and the positive direction of the Y-axis may determine an X-Y plane. A direction that is perpendicular to the X-Y plane and that points to a screen of the electronic device 100 from a rear housing of the electronic device 100 is taken as a positive direction of the Z-axis.

The magnitudes of the triaxial angular velocities are used to indicate a speed at which a user flips a mobile phone. When the magnitudes of the triaxial angular velocities are greater, the speed at which the user flips the mobile phone is faster. When the magnitudes of the triaxial angular velocities are greater than the first value, it indicates that the speed at which the user flips the mobile phone is sufficiently fast, and the user may perform an action of flipping the mobile phone.

2. An integral of an angular velocity around the Y-axis in first duration is greater than a second value.

For example, the second value may be 120°.

The first duration is approximately equal to duration that the user flips the mobile phone.

The integral of the angular velocity around the Y-axis in the first duration is used to indicate a flipping angle of the mobile phone. Generally, when the user flips the mobile phone and takes a selfie using a rear-facing camera, the flipping angle of the mobile phone is approximately 180°. When a change value of the angular velocity around the Y-axis is greater than the second value, it indicates that the flipping angle of the mobile phone is sufficiently large, and the user may perform the action of flipping the mobile phone.

The first preset condition may further be other conditions, which is not limited in this application.

In some embodiments, the first preset condition may also be referred to as a second condition.

The action detection module needs to determine whether the first processed motion data and the second processed motion data satisfy the first preset condition, that is, the action detection module needs to determine whether the first processed motion data satisfies the first preset condition and whether the second processed motion data satisfies the first preset condition. Only when both the first processed motion data and the second processed motion data satisfy the first preset condition, S804 is performed.

In some embodiments, after the action detection module is enabled, the action detection module continuously obtains the first motion data and the second motion data. The action detection module may read motion data based on a window with a fixed length, and determine whether the motion data in the window satisfies the first preset condition. When the motion data in the window satisfies the preset condition, the action detection module inputs the motion data in the window into the intention recognition model, to determine whether the action is a flipping action or a non-flipping action.

The action detection module may obtain a plurality of pieces of window data. If each piece of window data is input into the intention recognition model for detection, workload of the intention recognition model is heavy. The action detection module performs initial screening on the window data, and inputs only window data that satisfies the first preset condition into the intention recognition model for detection, to reduce workload of the intention recognition model, and reduce power consumption of the electronic device 100.

A maximum value of a magnitude of an angular velocity in the window data is greater than the first value, and the integral of the angular velocity around the Y-axis in the window data in the first duration is greater than the second value.

For example, FIG. 9B is a schematic diagram of magnitudes of triaxial angular velocities that are obtained by the action detection module and that are in the window data.

As shown in FIG. 9B, lengths of a window 1, a window 2, and a window 3 are fixed. A horizontal coordinate represents a data frame obtained by the action detection module. A vertical coordinate represents the magnitude of the angular velocity.

For example, the first value may be 4.

If a maximum value of magnitudes of triaxial angular velocities in the window 1 is 3.6, which is less than 4, the action detection module does not input motion data in the window 1 into the intention recognition model.

A maximum value of magnitudes of triaxial angular velocities in the window 2 is 4.1, which is greater than 4, the action detection module further calculates a change value of an angular velocity around the Y-axis corresponding to motion data in the window 2. If the change value of the angular velocity around the Y-axis corresponding to the motion data in the window 2 is greater than the second value, for example, greater than 120°, the action detection module needs to input the motion data in the window 2 into the intention recognition model. If the change value of the angular velocity around the Y-axis corresponding to the motion data in the window 2 is less than the second value, for example, less than 120°, the action detection module does not input the motion data in the window 2 into the intention recognition model.

A maximum value of magnitudes of triaxial angular velocities in the window 3 is 4.95, which is greater than 4, the action detection module further calculates a change value of an angular velocity around the Y-axis corresponding to motion data in the window 3. If a change value of an angular velocity around the Y-axis corresponding to the motion data in the window 3 is greater than the second value, for example, greater than 120°, the action detection module needs to input the motion data in the window 3 into the intention recognition model. If the change value of the angular velocity around the Y-axis corresponding to the motion data in the window 3 is less than the second value, for example, less than 120°, the action detection module does not input the motion data in the window 3 into the intention recognition model.

S803: End.

When it is determined that the first processed motion data and the second processed motion data do not satisfy the first preset condition, the first processed motion data and the second processed motion data are not input into the intention recognition model, and this process ends.

S804: The action detection module obtains first feature data based on the first motion data, and obtains second feature data based on the second motion data.

The first motion data may include acceleration data and angular velocity data collected by a first motion sensor on a screen A.

The second motion data may include acceleration data and angular velocity data collected by a second motion sensor on a screen B.

Feature data includes, but is not limited to: triaxial accelerations of the carrier coordinate system, triaxial angular velocities of the carrier coordinate system, triaxial accelerations of a navigation coordinate system, a magnitude of an acceleration, a magnitude of an angular velocity, a horizontal angular increment, a vertical angular increment, triaxial linear velocities, a position, a gyroscope data differential, and the like.

The triaxial accelerations of the carrier coordinate system may be raw triaxial accelerations collected by the first motion sensor, and the triaxial accelerations of the carrier coordinate system include a gravitational acceleration and a motion acceleration.

The triaxial angular velocities of the carrier coordinate system may be raw triaxial angular velocities collected by the first motion sensor.

The triaxial accelerations of the navigation coordinate system may be triaxial accelerations that are projected onto a geodetic coordinate system after the gravitational acceleration is subtracted from the triaxial accelerations of the carrier coordinate system.

The magnitude of the acceleration may be a value obtained by taking a square root of a sum of squares of an angular velocity around the X-axis, an angular velocity around the Y-axis, and an angular velocity around the Z-axis in either the triaxial accelerations of the navigation coordinate system or the triaxial accelerations of the carrier coordinate system.

The magnitude of the angular velocity may be a value obtained by taking a square root of a sum of squares of the angular velocity around the X-axis, the angular velocity around the Y-axis, and the angular velocity around the Z-axis in the triaxial angular velocities of the carrier coordinate system.

The horizontal angular increment may be an integral of an angular velocity of a horizontal component that is calculated after the triaxial angular velocities of the carrier coordinate system is projected onto triaxial angular velocities of the geodetic coordinate system.

The vertical angular increment may be an integral of an angular velocity of a vertical component that is calculated after the triaxial angular velocities of the carrier coordinate system is projected onto the triaxial angular velocities of the geodetic coordinate system.

The triaxial linear velocities may be triaxial linear velocities of the geodetic coordinate system that are obtained by projecting the accelerations onto the geodetic coordinate system and performing integration.

The position may be triaxial displacement components of the geodetic coordinate system that are obtained by projecting the acceleration onto the geodetic coordinate system and performing secondary integration.

The gyroscope data differential may be a value that is obtained by performing differential processing on the triaxial angular velocities of the carrier coordinate system, that is, a value that is obtained by subtracting the triaxial angular velocities of the carrier coordinate system in a previous frame from the triaxial angular velocities of the carrier coordinate system in a current frame in two adjacent frames.

The first feature data includes, but is not limited to, one or more of the following: triaxial accelerations of a first carrier coordinate system, triaxial angular velocities of the first carrier coordinate system, triaxial accelerations of a first navigation coordinate system, a magnitude of a first acceleration, a magnitude of a first angular velocity, a first horizontal angular increment, a first vertical angular increment, first triaxial linear velocities, a first position, a first gyroscope data differential, and the like.

The second feature data includes, but is not limited to, one or more of the following: triaxial accelerations of a second carrier coordinate system, triaxial angular velocities of the second carrier coordinate system, triaxial accelerations of a second navigation coordinate system, a magnitude of a second acceleration, a magnitude of a second angular velocity, a second horizontal angular increment, a second vertical angular increment, second triaxial linear velocities, a second position, a second gyroscope data differential, and the like.

S805: The action detection module inputs the first feature data and the second feature data into the intention recognition model, and the intention recognition model outputs a first intention recognition result and a second intention recognition result.

In some embodiments, the intention recognition model may be a GRU model.

The action detection module inputs the first feature data and the second feature data into the intention recognition model. The intention recognition model may output the first intention recognition result based on the first feature data, and may output the second intention recognition result based on the second feature data.

The first intention recognition result includes a flipping action or a non-flipping action.

The second intention recognition result includes a flipping action or a non-flipping action.

The intention recognition model may be obtained by training a plurality of sets of training samples that are obtained by performing preprocessing, and the intention recognition model may determine, based on feature data, whether the action is the flipping action or the non-flipping action. The intention recognition model may be a neural network model, such as a convolutional neural network model, a recurrent neural network model, or the like. A type of the intention recognition model is not limited in this embodiment of this application.

The training sample may include a plurality of sets of feature data corresponding to the flipping action and a plurality of sets of feature data corresponding to the non-flipping action.

The feature data corresponding to the flipping action may include one or more of the following: triaxial accelerations of the carrier coordinate system, triaxial angular velocities of the carrier coordinate system, triaxial accelerations of the navigation coordinate system, a magnitude of an acceleration, a magnitude of an angular velocity, a horizontal angular increment, a vertical angular increment, triaxial linear velocities, a position, and a gyroscope data differential that correspond to the flipping action.

The feature data corresponding to the non-flipping action may include one or more of the following: triaxial accelerations of the carrier coordinate system, triaxial angular velocities of the carrier coordinate system, triaxial accelerations of the navigation coordinate system, a magnitude of an acceleration, a magnitude of an angular velocity, a horizontal angular increment, a vertical angular increment, triaxial linear velocities, a position, and a gyroscope data differential that correspond to the non-flipping action.

The foregoing process of training the intention recognition model using the plurality of sets of training samples is a process in which the intention recognition model recognizes the flipping action or the non-flipping action based on input feature data.

A trained intention recognition model may receive the input feature data. The input feature data may include one or more of the following: the triaxial accelerations of the carrier coordinate system, the triaxial angular velocities of the carrier coordinate system, the triaxial accelerations of the navigation coordinate system, the magnitude of the acceleration, the magnitude of the angular velocity, the horizontal angular increment, the vertical angular increment, the triaxial linear velocities, the position, and the gyroscope data differential. The trained intention recognition model may output a recognition result based on the received input data. The recognition result may include the flipping action or the non-flipping action.

Optionally, S804 and S805 may not be performed. S804 and S805 may be replaced with the following steps:

The action detection module inputs the first processed motion data and the second processed motion data into the intention recognition model, and the intention recognition model outputs the first intention recognition result and the second intention recognition result.

In other words, the first feature data and the second feature data may be obtained without preprocessing the first processed motion data and the second processed motion data; and the intention recognition model may directly obtain the first intention recognition result and the second intention recognition result based on the first processed motion data and the second processed motion data.

The intention recognition model may be obtained by training the plurality of sets of training samples that are obtained by performing preprocessing, and the intention recognition model may determine, based on the feature data, whether the action is the flipping action or the non-flipping action. The intention recognition model may be the neural network model, such as the convolutional neural network model, the recurrent neural network model, or the like. The type of the intention recognition model is not limited in this embodiment of this application.

The training sample may include a plurality of sets of motion data corresponding to the flipping action and a plurality of sets of motion data corresponding to the non-flipping action.

The motion data corresponding to the flipping action may include acceleration data and angular velocity data corresponding to the flipping action.

The motion data corresponding to the non-flipping action may include acceleration data and angular velocity data corresponding to the non-flipping action.

The foregoing process of training the intention recognition model using the plurality of sets of training samples is a process in which the intention recognition model recognizes the flipping action or the non-flipping action based on input motion data.

The trained intention recognition model may receive the input motion data. The input motion data may include the acceleration data and the angular velocity data. The trained intention recognition model may output the recognition result based on the received input data. The recognition result may include the flipping action or the non-flipping action.

Preferably, the method steps shown in S804 and S805 may be adopted. The feature data is obtained based on the feature data, and then the intention recognition model outputs the recognition result based on the feature data. Compared to accuracy of the recognition result directly output by the intention recognition model based on the motion data, accuracy of the recognition result output by the intention recognition model based on the feature data is higher.

S806: The action detection module needs to determine whether both the first intention recognition result and the second intention recognition result are the flipping action.

If determining that both the first intention recognition result and the second intention recognition result are the flipping action, the action detection module may determine that the user flips the mobile phone, and performs S808.

If determining that any one or all of the first intention recognition result and the second intention recognition result are not the flipping action, the action detection module may determine that the user does not flip the mobile phone, and performs S807.

S807: End.

S808: The action detection module needs to determine, based on the first processed motion data and the second processed motion data, whether the flipping action is a flipping selfie action.

After determining the flipping action, the action detection module needs to further determine whether the flipping action is the flipping selfie action or a non-flipping selfie action. Therefore, in some scenarios, the user may flip the mobile phone and place the mobile phone on a table, or the user may hold the mobile phone to take a 360° rotation selfie. In order to improve accuracy of the action detection module in determining the flipping selfie action, the action detection module needs to exclude the non-flipping selfie action, to avoid misjudgments.

The action detection module may determine, based on the first processed motion data and the second processed motion data satisfying a second preset condition, that the flipping action is the flipping selfie action.

The second preset condition may include, but is not limited to, any one or more of the following:

> 1. A linear acceleration of the electronic device 100 is less than a third value.
> The linear acceleration of the electronic device 100 may be obtained by subtracting a gravitational acceleration from an acceleration value collected by a motion sensor on the electronic device 100.
> 2. A length of a motion trajectory of the electronic device 100 is less than a fourth value.

$$d = 0.5 * a^2 ...\text{Formula} \qquad (1)$$

> The electronic device 100 may obtain the length of the motion trajectory of the electronic device 100 through the Formula (1). As shown in Formula (1), d represents the length of the motion trajectory of the electronic device 100, and a represents the linear acceleration of the electronic device 100.
> 3. A rotation radius of the electronic device 100 is less than a fifth value.

$$r = a/w^2 ...\text{Formula} \qquad (2)$$

The electronic device 100 may obtain the rotation radius of the electronic device 100 through the Formula (2). As shown in the Formula (2), r represents the rotation radius of the electronic device 100, a represents the linear acceleration of the electronic device 100, and w represents an angular velocity collected by the motion sensor on the electronic device.

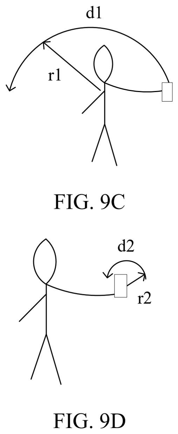

As shown in FIG. 9C, when the user holds the electronic device 100 to take a rotation selfie, the length of the motion trajectory of the electronic device 100 is d1, and the rotation radius of the electronic device 100 is r1.

As shown in FIG. 9D, when the user flips the electronic device 100 and takes a selfie using the rear-facing camera, the length of the motion trajectory of the electronic device 100 is d2, and the rotation radius of the electronic device 100 is r2.

It may be learned from FIG. 9C and FIG. 9D that d1 is much greater than d2, and r1 is much greater than r2. Whether the flipping action is the flipping selfie action or the non-flipping selfie action may be determined based on one or more of the linear acceleration of the electronic device 100, the length of the motion trajectory of the electronic device 100, and the rotation radius of the electronic device 100.

Specifically, when the linear acceleration of the electronic device 100 is less than the third value, the length of the motion trajectory of the electronic device 100 is less than the fourth value, and/or the rotation radius of the electronic device 100 is less than the fifth value, the action detection module may determine that the flipping action is the flipping selfie action.

When the linear acceleration of the electronic device 100 is greater than the third value, the length of the motion trajectory of the electronic device 100 is greater than the fourth value, and/or the rotation radius of the electronic device 100 is greater than the fifth value, the action detection module may determine that the flipping action is the non-flipping selfie action.

In some embodiments, the second preset condition may further be referred to as a first condition.

After determining that the flipping action is the flipping selfie action, the electronic device 100 performs S809.

After determining that the flipping action is the non-flipping selfie action, the electronic device 100 performs S810.

S809: End.

S810: The action detection module outputs a flipping selfie action result.

After the electronic device 100 determines that the flipping action is the flipping selfie action, the action detection module outputs the flipping selfie action result. The action detection module may send the flipping selfie action result to the intention correction module, enabling the intention correction module to determine whether to activate the rear-facing camera and turn on the screen B.

The following describes the working principle of the intention correction module.

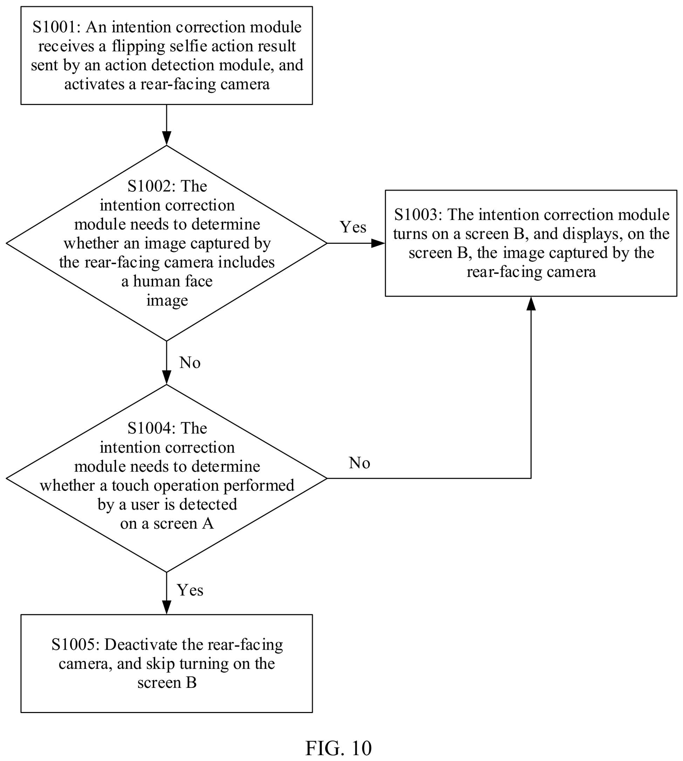

FIG. 10 is a schematic diagram of a working principle of the intention correction module.

S1001: An intention correction module receives a flipping selfie action result sent by an action detection module, and activates a rear-facing camera.

After the action detection module receives the flipping selfie action result, the action detection module sends the flipping selfie action result to the intention correction module.

In response to the flipping selfie action result, the intention correction module activates the rear-facing camera. The intention correction module activates the rear-facing camera to monitor whether the rear-facing camera recognizes a human face image, thereby determining whether a user takes a selfie using the rear-facing camera.

In this case, a front-facing camera is still activated, and an image captured by the front-facing camera is still displayed on a screen A.

S1002: The intention correction module needs to determine whether an image captured by the rear-facing camera includes the human face image.

In response to the flipping selfie action result, the intention correction module activates the rear-facing camera. The rear-facing camera of the electronic device 100 starts capturing an image. The intention correction module needs to determine whether the image captured by the rear-facing camera includes the human face image.

If determining that the image captured by the rear-facing camera includes the human face image, the intention correction module may determine that the user flips the electronic device 100 and takes a selfie using the rear-facing camera of the electronic device 100, and then perform S1003.

If determining that the image captured by the rear-facing camera does not include the human face image, the intention correction module needs to further determine whether the user takes a selfie using the rear-facing camera of the electronic device 100, and then performs S1004.

In some embodiments, when determining that the image captured by the rear-facing camera does not include the human face image and continuously determining, in first duration, that the image captured by the rear-facing camera does not include the human face image, the intention correction module performs S1004.

S1003: The intention correction module turns on a screen B, and displays, on the screen B, the image captured by the rear-facing camera.

When determining that the image captured by the rear-facing camera includes the human face image, the intention correction module may determine that the user flips the electronic device 100 and takes a selfie using the rear-facing camera of the electronic device 100, and the intention correction module turns on the screen B, and displays, on the screen B, the image captured by the rear-facing camera. In this way, when the user takes a selfie using the rear-facing camera, the user may view, on the screen B, the image captured by the rear-facing camera.

In this case, the intention correction module deactivates the front-facing camera and turns off the screen A.

S1004: The intention correction module needs to determine whether a touch operation performed by the user is detected on the screen A.

If determining that the image captured by the rear-facing camera does not include the human face image, the intention correction module needs to further determine whether the user takes a selfie using the rear-facing camera of the electronic device 100.

The intention correction module may determine, based on a contact point on the screen A, whether the user flips the mobile phone and takes a selfie using the rear-facing camera. Specifically, when the intention correction module needs to determine that the touch operation performed by the user is not detected on the screen A, it indicates that there is no touch point on the screen A. The intention correction module may determine that the user takes a selfie using the rear-facing camera of the electronic device 100, and then perform S1003. The intention correction module turns on the screen B, and displays, on the screen B, the image captured by the rear-facing camera.

In some embodiments, when determining that the image captured by the rear-facing camera does not include the human face image and continuously determining, in second duration, that there is no touch point on the screen A, that is, continuously determining, in the second duration, that the touch operation performed by the user is not detected on the screen A, the intention correction module turns on the screen B, and displays, on the screen B, the image captured by the rear-facing camera.

When the intention correction module needs to determine that the touch operation performed by the user is detected on the screen A, it indicates that there is the touch point on the screen A, that is, the user performs an operation on the screen A, and performs S1005.

In this case, the electronic device 100 still activates the front-facing camera, and displays, on the screen A, the image captured by the front-facing camera.

S1005: The intention correction module deactivates the rear-facing camera, and does not turn on the screen B.

When determining that the image captured by the rear-facing camera does not include the human face image and determining that the touch operation performed by the user is detected on the screen A, it indicates that there is the touch point on the screen A, that is, the user performs an operation on the screen A, and the intention correction module deactivates the rear-facing camera, and does not turn on the screen B.

In this case, the electronic device 100 still activates the front-facing camera, and displays, on the screen A, the image captured by the front-facing camera.

In other embodiments, after the action detection module obtains the flipping selfie action result, the action detection module sends the flipping selfie action result to the intention correction module.

In response to the flipping selfie action result, the intention correction module activates the rear-facing camera, turns on the screen B, and displays, on the screen B, the image captured by the rear-facing camera. In addition, the intention correction module deactivates the front-facing camera, and turns off the screen A.

Various implementations of this application may be combined randomly to achieve different technical effects.

All or some of the foregoing embodiments may be implemented by software, hardware, firmware, or any combination thereof. When software is used to implement the embodiments, all or some of the embodiments may be implemented in the form of a computer program product. The computer program product includes one or more computer instructions. When the computer program instructions are loaded and executed on a computer, all or some of the procedures or functions according to this application are generated. The computer may be a general-purpose computer, a dedicated computer, a computer network, or any other programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired manner (for example, through a coaxial cable, an optical fiber, or a digital subscriber line) or in a wireless manner (for example, through infrared rays, radio, or microwave). The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

A person of ordinary skill in the art may understand that all or some of the procedures of the methods in the foregoing embodiments are implemented. The procedures may be completed by a computer program instructing related hardware. The program may be stored in a computer-readable storage medium. When the program is executed, the procedures in the foregoing method embodiments may be included. The foregoing storage medium includes various media that can store program code, for example, a ROM, a random access memory RAM, a magnetic disk, or an optical disc.

In conclusion, the descriptions above are merely embodiments of the technical solutions of the present invention, but are not intended to limit the protection scope of the present invention. Any modifications, equivalent replacements, improvements, or the like made based on the disclosure of the present invention shall fall within the protection scope of the present invention.

## Claims

1. A shooting method, applied to an electronic device comprising a flexible display, wherein the flexible display comprises a first display and a second display, the first display comprises a front-facing camera and a first motion sensor, a back surface of the first display comprises a rear-facing camera, the first display and the second display are disposed back-to-back when the flexible display is in a folded state, and the method comprises:

   receiving, by the electronic device, a first user operation;
   in response to the first user operation, displaying, by the electronic device, a first selfie image on the first display, wherein the first selfie image comprises a human face image, and the first selfie image is an image frame captured by the front-facing camera;
   receiving, by the electronic device, a second user operation;
   obtaining, by the electronic device, first motion data collected by the first motion sensor;
   determining, by the electronic device based on the first motion data, that the second user operation is a flipping selfie action; and
   in response to the second user operation being the flipping selfie action, activating, by the electronic device, the rear-facing camera, and displaying a second selfie image on the second display, wherein the second selfie image is an image frame captured by the rear-facing camera.

2. The method according to claim 1, wherein the determining, by the electronic device based on the first motion data, that the second user operation is a flipping selfie action specifically comprises:

   inputting, by the electronic device, the first motion data into an intention recognition model, and determining, by using the intention recognition model, that the second user operation is a flipping action; and
   in response to the second user operation being the flipping action, when the first motion data satisfies a first condition, determining, by the electronic device, that the first user operation is the flipping selfie action, wherein
   the first condition comprises any one or more of the following: a linear acceleration of the electronic device being less than a third value, a length of a motion trajectory of the electronic device being less than the third value, and a rotation radius of the electronic device being less than a fifth value.

3. The method according to claim 2, wherein a direction that is perpendicular to a left-side edge and a right-side edge of the electronic device and that points to the right-side edge of the electronic device from the left-side edge of the electronic device is taken as a positive direction of an X-axis; a direction that is perpendicular to an upper-side edge and a lower-side edge of the electronic device and that points to the upper-side edge of the electronic device from a lower left-side edge of the electronic device is taken as a positive direction of a Y-axis; a direction that is perpendicular to the X-axis and the Y-axis and that is away from the rear-facing camera is taken as a positive direction of a Z-axis; and before the inputting, by the electronic device, the first motion data into an intention recognition model, the method further comprises:

   when the first motion data satisfies a second condition, inputting, by the electronic device, the first motion data into the intention recognition model, wherein
   the second condition comprises any one or more of the following: magnitudes of angular velocities around the X-axis, the Y-axis, and the Z-axis being greater than a first value; and an integral of an angular velocity around the Y-axis in first duration being greater than a second value.

4. The method according to any one of claims 1 to 3, wherein the obtaining, by the electronic device, first motion data collected by the first motion sensor specifically comprises:
   after it is detected that the human face image in the image frame captured by the front-facing camera disappears, obtaining, by the electronic device, the first motion data collected by the first motion sensor.

5. The method according to any one of claims 1 to 4, wherein the method further comprises:
   in response to displaying a second selfie image on the second display, deactivating, by the electronic device, the front-facing camera, and turning off the first display.

6. The method according to any one of claims 1 to 4, wherein after the activating, by the electronic device, the rear-facing camera, the method further comprises:
   deactivating, by the electronic device, the front-facing camera, and turning off the first display.

7. The method according to any one of claims 1 to 6, wherein the displaying, by the electronic device, a second selfie image on the second display specifically comprises:
   when it is detected that the image frame captured by the rear-facing camera comprises the human face image, displaying, by the electronic device, the second selfie image on the second display.

8. The method according to any one of claims 1 to 6, wherein the displaying, by the electronic device, a second selfie image on the second display specifically comprises:
when it is detected that the image frame captured by the rear-facing camera does not comprise the human face image and no operation performed on the first display by a user is received in second duration, displaying, by the electronic device, the second selfie image on the second display.

9. The method according to claim 8, wherein the method further comprises:
when it is detected that the image frame captured by the rear-facing camera does not comprise the human face image and an operation performed on the first display by the user is received in the second duration, deactivating, by the electronic device, the rear-facing camera.

10. The method according to claim 9, wherein the method further comprises:
activating, by the electronic device, the front-facing camera, and continuously displaying, on the first display, the image frame captured by the front-facing camera.

11. The method according to any one of claims 1 to 10, wherein the second display further comprises a second motion sensor; and before the determining, by the electronic device based on the first motion data, that the second user operation is a flipping selfie action, the method further comprises:

   obtaining, by the electronic device, second motion data collected by the second motion sensor; and
   the determining, by the electronic device based on the first motion data, that the second user operation is a flipping selfie action specifically comprises:
   determining, by the electronic device based on the first motion data and the second motion data, that the second user operation is the flipping selfie action.

12. The method according to any one of claims 1 to 11, wherein the first motion sensor comprises an acceleration sensor and/or an angular velocity sensor, and the first motion data comprises acceleration data or angular velocity data.

13. The method according to claim 11, wherein the second motion sensor comprises an acceleration sensor and/or an angular velocity sensor, and the second motion data comprises acceleration data or angular velocity data.

14. An electronic device, comprising one or more processors and one or more memories, wherein the one or more memories are coupled to the one or more processors, the one or more memories are configured to store computer program code, the computer program code comprises a computer instruction, and when the one or more processors execute the computer instruction, the method according to any one of claims 1 to 13 is performed.

15. A computer-readable storage medium, comprising an instruction, wherein when the instruction is run on an electronic device, the method according to any one of claims 1 to 13 is performed.

Electronic device 100

FIG. 1

| Application layer | Camera | Calendar | Map | WLAN | Music | Messaging |
|---|---|---|---|---|---|---|
| | Gallery | Phone | Navigation | Bluetooth | Video | ... |

| Application framework layer | Window manager | Content provider | Phone manager | Resource manager |
|---|---|---|---|---|
| | Notification manager | View system | ... | |

| System library | Surface manager | 3D graphics processing library | Android runtime |
|---|---|---|---|
| | Two-dimensional graphics engine | Media library | ... |

| Kernel layer | Display driver | Camera driver | |
|---|---|---|---|
| | Audio driver | Sensor driver | ... |

FIG. 2

α

Screen A          Screen B

Screen A          Screen B

(a)                              (b)

FIG. 3A

Screen A

Screen B

Screen B

Screen A

Screen A

Screen B

Screen B

Screen A

(a)

(b)

FIG. 3B

Screen A

α

Screen B

Screen A

Screen B

FIG. 3C

**Unfolded state**

**Front surface**

Screen A

201

Screen B

(a)

**Back surface**

(b)

FIG. 4A

**Folded state**

**Front surface**

Screen A ←

(a)

**Back surface**

→ Screen B

(b)

FIG. 4B

FIG. 5A

510

APERTURE NIGHT PORTRAIT **PHOTO** VIEDO MOVIE PRO

FIG. 5B

520

PORTRAIT **PHOTO** VIEDO

△

FIG. 5C

FIG. 6A

610

APERTURE NIGHT PORTRAIT **PHOTO** VIEDO MOVIE

FIG. 6B

620

APERTURE NIGHT PORTRAIT **PHOTO** VIEDO MOVIE

FIG. 6C

Y

620

0.5   1×   2.5   10

APERTURE NIGHT PORTRAIT **PHOTO** VIEDO MOVIE

FIG. 6D

630

PORTRAIT **PHOTO** VIEDO

FIG. 6E

Detection trigger module

1. Obtain first motion data collected by a first motion sensor on a screen A and/or second motion data collected by a second motion sensor on a screen B

2. Monitor whether a human face image in an image captured by a front-facing camera disappears

3. When the human face image in the image captured by the front-facing camera disappears, send the first motion data and the second motion data

Action detection module

4. Recognize, based on the first motion data and/or the second motion data, a flipping action and a non-flipping action

5. If the flipping action is recognized, further determine a flipping selfie action based on first processed motion data and/or second processed motion data

6. Flipping selfie action result

Intention correction module

7. Activate a rear-facing camera

8. If the rear-facing camera recognizes the human face image, display, on the screen B, a human face image captured by the rear-facing camera

9. If the rear-facing camera does not recognize the human face image and it is detected that a user does not perform an operation on the screen A, display, on the screen B, the image captured by the rear-facing camera

10. If the rear-facing camera does not recognize the human face image and it is detected that a user performs an operation on the screen A, deactivate the rear-facing camera

FIG. 7

First motion data collected by a first motion sensor on a screen A

Second motion data collected by a second motion sensor on a screen B

S801: An action detection module performs preprocessing on the first motion data and the second motion data, to obtain first processed motion data and second processed motion data

S802: The action detection module needs to determine whether the first processed motion data and the second processed motion data satisfy a preset condition

No → S803: End

Yes

S804: The action detection module obtains first feature data based on the first motion data, and obtains second feature data based on the second motion data

S805: The action detection module inputs the first feature data and the second feature data into an intention recognition model, and the intention recognition model outputs a first intention recognition result and a second intention recognition result

S806: Determine whether both the first intention recognition result and the second intention recognition result are a flipping action

No → S807: End

S808: Determine, based on the first processed motion data and the second processed motion data, whether the flipping action is a flipping selfie action

No → S809: End

Yes

S810: The action detection module outputs a flipping selfie action result

FIG. 8

FIG. 9A

FIG. 9B

d1

r1

FIG. 9C

d2

r2

FIG. 9D

S1001: An intention correction module receives a flipping selfie action result sent by an action detection module, and activates a rear-facing camera

S1002: The intention correction module needs to determine whether an image captured by the rear-facing camera includes a human face image

Yes

S1003: The intention correction module turns on a screen B, and displays, on the screen B, the image captured by the rear-facing camera

No

S1004: The intention correction module needs to determine whether a touch operation performed by a user is detected on a screen A

No

Yes

S1005: Deactivate the rear-facing camera, and skip turning on the screen B

FIG. 10

## INTERNATIONAL SEARCH REPORT

| International application No. |
| --- |
| **PCT/CN2024/111615** |

| A. | CLASSIFICATION OF SUBJECT MATTER |
| --- | --- |

H04N23/60(2023.01)i; H04N5/00(2011.01)i; H04M1/725(2021.01)i

According to International Patent Classification (IPC) or to both national classification and IPC

| B. | FIELDS SEARCHED |
| --- | --- |

Minimum documentation searched (classification system followed by classification symbols)

IPC:H04N; H04M

Documentation searched other than minimum documentation to the extent that such documents are included in the fields searched

Electronic data base consulted during the international search (name of data base and, where practicable, search terms used)

CNTXT, ENTXTC, ENTXT, DWPI, VEN: 翻转, 镜头, 录像, 录制, 拍摄, 拍照, 屏, 切换, 柔性, 摄像头, 摄影, 相机, 旋转, 折叠, 自动, 自拍, foldable screen, rotate, capture, change, camera, exchange, selfie, flip, automatic

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | WO 2019227281 A1 (HUAWEI TECHNOLOGIES CO., LTD.) 05 December 2019 (2019-12-05) description, page 3 line 31-page 15 line 39, and figures 1-14 | 1-15 |
| Y | CN 116437194 A (HONOR TERMINAL CO., LTD.) 14 July 2023 (2023-07-14) description, paragraphs 0117-0320, and figures 1-19 | 1-15 |
| A | CN 115460318 A (HUAWEI TECHNOLOGIES CO., LTD.) 09 December 2022 (2022-12-09) entire document | 1-15 |
| A | CN 107613196 A (ZHUHAI GREE ELECTRIC APPLIANCES INC.) 19 January 2018 (2018-01-19) entire document | 1-15 |
| A | US 2022350374 A1 (HUAWEI TECHNOLOGIES CO., LTD.) 03 November 2022 (2022-11-03) entire document | 1-15 |

| ☐ Further documents are listed in the continuation of Box C. | ☑ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **11 October 2024** | **28 October 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/111615**

| Patent document cited in search report | | | Publication date (day/month/year) | Patent family member(s) | | | Publication date (day/month/year) |
|---|---|---|---|---|---|---|---|
| WO | 2019227281 | A1 | 05 December 2019 | US | 2021208831 | A1 | 08 July 2021 |
| | | | | EP | 3779643 | A1 | 17 February 2021 |
| | | | | WO | 2019227553 | A1 | 05 December 2019 |
| | | | | CN | 112136100 | A | 25 December 2020 |
| | | | | CN | 111164539 | A | 15 May 2020 |
| CN | 116437194 | A | 14 July 2023 | WO | 2023124178 | A1 | 06 July 2023 |
| | | | | EP | 4362483 | A1 | 01 May 2024 |
| | | | | CN | 118338119 | A | 12 July 2024 |
| CN | 115460318 | A | 09 December 2022 | WO | 2022257889 | A1 | 15 December 2022 |
| | | | | EP | 4181494 | A1 | 17 May 2023 |
| | | | | US | 2024012451 | A1 | 11 January 2024 |
| | | | | KR | 20230038290 | A | 17 March 2023 |
| | | | | VN | 100032 | A | 25 January 2024 |
| CN | 107613196 | A | 19 January 2018 | None | | | |
| US | 2022350374 | A1 | 03 November 2022 | WO | 2021063311 | A1 | 08 April 2021 |
| | | | | EP | 4027629 | A1 | 13 July 2022 |
| | | | | CN | 110798568 | A | 14 February 2020 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311215558